# EUROPEAN PATENT APPLICATION

(11) **EP 2 469 945 A1**
(43) Date of publication of application: **27.06.2012**
(21) Application number: 10252203.4
(22) Date of filing: 23.12.2010
(51) Int. Cl.: H04W 64/00, H04L 29/12

(54) **WLAN location services**

(71) Applicant: British Telecommunications public limited company, London EC1A 7AJ (GB)
(72) Inventor: The designation of the inventor has not yet been filed
(74) Representative: Brinck, Coreena Fiona Anne

(57) **Abstract**

A method of locating a wireless communications-enabled device roaming in a wireless local area network from which a request for connection to a data-service originates. The method comprises receiving the request at a data-server for the requested data-service; processing the received request for connection to the data-service to determine a public source address of the connection request; generating a location request query for the public source address; sending the location request query to a location server; processing the public source address for the connection request at the location server to determine a private source address; and mapping the private source address to a physical location by associating the private source address with a range of source addresses allocated to a wireless local area network access point providing the wireless local area network via which the device sends the request for connection to the data-service to the data-server.

## Description

The present invention relates to a method and system for providing wireless local area network (WLAN) location services. In particular but not exclusively, the invention relates to a method and system for providing a location service to locate a device which has associated with WLAN provided by a wireless access point whose location is known. The method and system in particular but not exclusively enable a location service to be provided to a web-server which has received a connection request from a device using a guest access WLAN, for example from a device roaming in an open-access WLAN.

Many location-based services are known in the art, some of which rely on cellular communications technology providing location data, some of which use Global Positioning System (GPS) technology. Most services rely on the user of the device to be location using that device or explicitly activating an application on the device.

Many web-services are already known to provide information for particular localities, which a user might seek to access. The parties providing such services may provide locality-specific information or information of interest to roaming device. Such services may be dependent on or be modified by any known location information for the device requesting the service. Some services may broadcast information, or wish to multicast to devices known to be "roaming" devices as opposed to devices which are not "roaming" which are considered to be in their "home" or "native" WLAN. The term "roaming device" as used herein refers to a device which associates with a WLAN using credentials which are not associated with the broadband access line subscription connected to the wireless access point (AP) providing the WLAN. A "guest" or "visitor" device is also a "roaming" device. All such "roaming devices" roam into at least one WLAN whose credentials are not used to authorise the device for connection to the broadband service. As stronger levels of trust are increasingly in demand for web-based service transactions, the roaming movement of devices presents challenges unless a reliable way of determining the location of a device is provided.

Many service providers, network operators and other third parties (i.e., any entity other than the user of a device) offer services where location verification enhances the level of trust when authorising use of these services. However, providing a service which requires or is enhanced by knowledge of the location and/or movement of one or more devices may require information on location before a user has sought to use the wireless local area network in a roaming capacity. Accordingly, it is also useful, if device location and/or movements can be determined remotely during usage of the roaming service by the device and/or even before a device located within the range of a guest-access WLAN attempts usage of the roaming access service.

The ability to monitor a plurality of devices to determine how many are roaming in a number of privately-owned/operated WLANs, such as those provided devices such as British Telecommunications Home Hub™ digital subscriber line (DSL) based wireless network AP, presents additional challenges compared to the situation where a public-access point is owned directly by a service provider. For example, there is a greater statistical likelihood that access points may be moved as subscribers move the location of their service subscription (for example, due to moving house etc).

It is known in the art for traffic from roaming (or equivalently, guest or visitor) devices which is directed to the core network via such APs to travel along a secure tunnel to a captive portal which blocks the traffic to prevent its further propagation into the network before a user login process to authenticate the use of the roaming service is completed.

WO 2007/121331 entitled "Mobile computing device geographic location determination" describes a system in which after a mobile device has registered successfully with a network controller, geographic location information on the device is retrieved from a database by a service mobile location centre and provided to the network controller. The database stores information such as last known position, IP address, MAC address, a mobile or subscriber identifier, etc. The geographic information is then communicated back to the network controller which is configured to forward the position information onwards for processing (e.g. via a switch for emergency calls).

WO2009/006940 entitled "Unlicensed mobile access (UMA) terminal location in a communications network" describes a method of managing location information for an UMA terminal in a GSM (Global System for Mobile Communications) network in which an IP address for the UAM terminal is received at a generic access network controller. The generic network controller queries a connectivity session location and repository function associated with the IP network or IP sub-network via which the UMA terminal has gained IP connectivity for location information which can then be forwarded to a mobile switching centre or serving general packet radio system service node.

The embodiments of the invention seek to provide a location service which uses a different data-collection system to provide location information. Known techniques in the art associate the MAC address of a wireless access point with its physical location and use this to provide a fix on its location. However, the data which is used to indicate the location of the wireless AP is collected in a very basic manner. For example, one technique uses WLAN detectors in vehicles which roam geographic areas to detect what WLANs are provided in which location. This is time-consuming and cumbersome and a limited number of access points in practice are detectable this way, as such street surveys only detect WLAN offered by access points within the range of the detecting device, which may be limited to areas in close proximity to public rights of way. Moreover, should an access point be moved, the information becomes inaccurate, without any ability to determine that the information already stored is no-longer accurate. Services which use location inaccurate or out of date information unknowingly result in problems ranging from being irritating to being unusable, and where emergency VoIP calls are being made using a roaming access WLAN, the results may be fatal if the emergency service response is sent to the wrong location.

### SUMMARY STATEMENTS OF INVENTION

A first aspect of the invention seeks to provide a method of locating a wireless communications-enabled device roaming in a wireless local area network. The device may have generated a service request for connection to a data-service provided by a remote data server such as a web-server. The method may comprise: receiving the service request at the data-server for the requested data-service; processing the received request to determine a public source address of the device which generated the service request; generating a location request query for the public source address; sending the location request query to a location server; processing the public source address for the connection request at the location server to determine a private source address; and mapping the private source address to a physical location by associating the private source address with a range of source addresses allocated to a wireless local area network access point providing the wireless local area network used by the device to send the request for connection to the data-service to the data-server.

The method may further comprise reporting the physical location of the device to the data-server for the requested data-service.

The physical location of the device may be determined by: determining the physical location of the wireless network access point providing said device with wireless internet connectivity.

The physical location of the wireless network access point providing said device with wireless internet connectivity may be determined by: associating the IP address of the device to an IP address range associated with an identifier for the access point providing said wireless local area network access used by the device; determining from the wireless local area network access point's identifier a service identifier for the connection over the access network which is used by said wireless local area network access point; and determining from the service identifier a geographic address at which the wireless local area network access point is located. The service identifier for the connection over the access network may comprise a calling line identifier for a broadband activated communications service line over a public switched telephone network.

The physical location of the device may be reported to said data-server dynamically in real-time in response to said location request from said data-server.

The data-server may process said response to perform a look-up operation using the location provided in the response from the location server to determine if said location provided in the response corresponds to a list of locations permitted to access said data-service.

The look-up operation may further include the location server providing a device identifier in its response or a device identifier provided in the service request and the data server may use the device identifier to look-up if this matches a device identifier in a stored data record from which location information is retrievable using said private IP address, and the method may further comprise returning retrieved location information only in the event of a match.

The look-up operation may further include using a user-identifier extracted from the service request to look-up a matching user identifier stored in a data record corresponding to said private IP address, and the method may further comprises returning retrieved location information only in the event of a match.

A device identifier may comprise a MAC address for a device.

A data-service may comprise a world-wide-web based service, for example a service accessed by entering a universal resource locator into the web-site address field of a web-browser application running on the requesting device.

The data-service requested by the requesting device may comprise a location service for locating the requesting device. The data-service server may comprise said location server.

Another aspect of the invention seeks to provide a method of locating a wireless communications-enabled device roaming in a wireless local area network from which a request for connection to a web-service originates, the method comprising: receiving the request for the requested web-service; processing the received request for connection to the web-service to determine a public source address of the connection request; generating a location request query for the public source address; processing the public source address for the connection request to determine a private source address; and mapping the private source address to a physical location by associating the private source address with a range of source addresses allocated to a wireless local area network access point providing the wireless local area network via which the device sends the request for connection to the web-service.

The requested web-service may comprise a location finding service, and this method aspect may further comprise: reporting the physical location of the requesting device. Other services however, may just use the device location, for example, to provide details of nearby shops, public services and travel facilities etc., etc.

The physical location of the wireless access point providing the wireless network used by the device may be verified each time the wireless access point establishes a connection over the local access network to an access server.

The physical location of the wireless network access point location may be determined each time the access point negotiates a connection over an access network.

A connection over an access network may comprise a broadband digital subscriber line (DSL) connection.

The device may be roaming in a WLAN configured to allow roaming device usage when it generates the service request which requires the device location information.

The public IP address of the device may be paired with a port identifier.

Another aspect of the invention seeks to provide a location server system arranged to provide a location service to data-servers, the location server system being arranged to locate wireless communications-enabled devices in a plurality of wireless local area network from which requests for connection to data-services originate, the location server system comprising: means to receive a location request from a data-server which has received a request for connection to a data-service from a service requesting wireless communications-enabled device, the request including a public source address for the device; means to associate said public source address with a private source address; means to associate the private source address to a range of private source addresses which are allocated to a wireless local area network access point providing a wireless local area network via which the device sends the request for connection to the data-service to the data-server; means to generate a response identifying the location of the wireless network access point having the allocatable address range within which the device private IP address lies, as the location of the service requesting device to the requesting data-server; and means to send said generated response to the requesting data-server.

The data-service may provide a world-wide-web application-based data service.

The data-service requested by the device may comprise said location service.

Another aspect of the invention seeks to provide a system for locating a wireless communications-enabled device roaming in a wireless local area network from which a request for connection to a data-service originates, the system comprising: means for determining a public source address for said device; means for generating a location request query for the public source address; means for sending the location request query to a location server; means for processing the public source address for the connection request at the location server to determine a private source address; and means for mapping the private source address to a physical location by associating the private source address with a range of source addresses allocated to a wireless local area network access point providing the wireless local area network via which the device has sent said request for connection.

Another aspect of the invention seeks to provide a method of providing location information to a data-server providing a service which uses location information, the method comprising: storing device presence information indicating the presence of a device in a wireless local area network in a data record for said device; storing in said data record for said device as a device location an address for service of an access network connection service used by an access point providing said wireless local area network; using location query index information extracted from a service request generated by an authenticated device and sent to said data-server to retrieve from said data record for said authenticated device said device location; and sending said device location information to said data server for use by said requested service, wherein said device presence information is generated prior to said device being authenticated to use a communications link provided by said access network connection service, and wherein said location query index information used to search for said data record comprises one or more of the following: a public IP source address for said authenticated device included in said service request; and a device identifier for said authenticated device included in said service request.

The invention seeks in one embodiment to provide a method which enables location services to use data collected subsequent to the association of a device with a wireless local area network but prior to the user being authenticated for roaming access over the guest WLAN. This enables the location of the device to be determined in advance of any authenticated use by the device within the network. The data enabling location information is processed prior to any authenticated use by the device of a roaming WLAN access service. This can result in location information being provided faster when the device is subsequently authorised and requests a service which depends on or is modifiable by location information. The invention uses location information associated with the address for service of the wireless access point.

The aspects and preferred embodiments of the invention are as set out below and in the accompanying claims, and may be combined in any appropriate manner apparent to one of ordinary skill in the art.

Embodiments of the drawings will now be described with reference to the accompanying drawings in which
Figure 1 shows schematically an exemplary scenario in which a plurality of WLAN communications systems for which WLAN location services according to an embodiment of the invention are provided;
Figure 2 shows schematically a basic overview of elements of a WLAN system shown in Figure 1 and of elements in an access network architecture providing broadband connectivity for the WLAN communications systems of the embodiment shown in Figure 1;
Figure 3 shows schematically how data flows between elements of an access network communications system when an AP seeks to establish a connection request over the access network;
Figure 4 shows schematically a flow diagram for some of the data flows which are generated when an AP seeks to establish a connection request over an access network;
Figure 5 shows the network architecture of a communications system in which a WLAN device location information service is provided according to an embodiment of the invention;
Figures 6A, 6B, and 6C show alternative address assignment schemes which an AP can implement to assign an IP address to a roaming device;
Figures 7A, 7B, and 7C are flow diagrams showing how information is initially collected for providing WLAN location services according to three embodiments of the invention;
Figure 8 shows how post-authentication traffic is made available for providing WLAN location services according to an embodiment of the invention;
Figures 9A, 9B, and 9C show schematically the different types of traffic initially and subsequently used for providing WLAN location services in three different embodiments of the invention which use the address assignment schemes shown in Figures 6A,B,C respectively;
Figures 10A, 10B, and 10C show steps in a method of generating WLAN location information using data collected by a monitoring system to provide WLAN location services according to the corresponding embodiments of the invention shown in Figures 9A,B,C;
Figures 11A and 11B show schematically a central monitoring system according to embodiments of the invention;
Figure 12 shows a hierarchical monitoring system for a large geographic area;
Figure 13 shows a device WLAN location services system according to an embodiment of the invention;
Figure 14A shows a device communicating with a location service requesting platform according to an embodiment of the invention;
Figure 14B shows how NAT affects the provision of a device location service to the service requesting platform of Figure 14A; and
Figures 15A and 15B shows steps respectively performed by a service requesting platform and a location services system in an embodiment of a device WLAN location information service according to the invention.

The best mode of the invention will now be described with reference to the accompanying drawings. In the following description of the preferred embodiments of the invention, those of ordinary skill in the art will be aware of modifications and functional equivalents to those features of the invention which are described herein below and that certain features of the invention may be omitted from the description for the sake of brevity and clarity where their inclusion and function as part of the invention is apparent and known to those of ordinary skill in the art.

A communications system architecture is described herein which provides a means of monitoring data for the purpose of providing location information on a communications-enabled device which is capable of using a plurality of short-range WLAN networks in a guest context. A device can thus perform a sort of "roaming" although no formal "handover" may be implemented between the networks. The location service may not be persistently available as a device may be locatable according to the invention within the area covered by one WLAN but then move out of coverage and into an area with no WLAN service and be unlocatable before being locatable again when it moves into another area where WLAN coverage is provided. Although each WLAN may cover an area of less than 100 m², local monitoring system data can be aggregated to enable the system to be scaled such that location services can be provided over a national or international area.

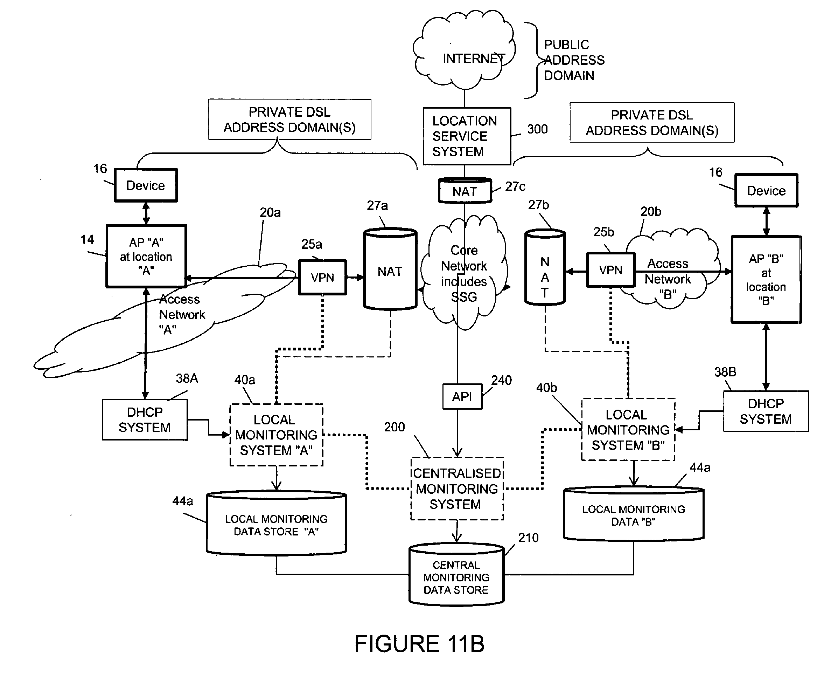

A network infrastructure is described which enables the collation of information from a plurality of data stores associated with telecommunications services. The data stores are associated with different control domains and/or services and access is constrained by the inherent data collection techniques used to populate each data store, which results in differing data record structures searchable using a plurality of different search indices. This enables the physical location of an AP using a broadband connection such as that provided by a digital subscriber line (DSL) modem for example to be determined with close to real-time levels of responsiveness to location queries received by a location services platform (see Figure 11 B) remotely located within the network. As devices may be mobile, an inherent constraint is that their location must be fixed within a reasonable amount of time, preferably in real-time, to ensure that accurate location information is provided.

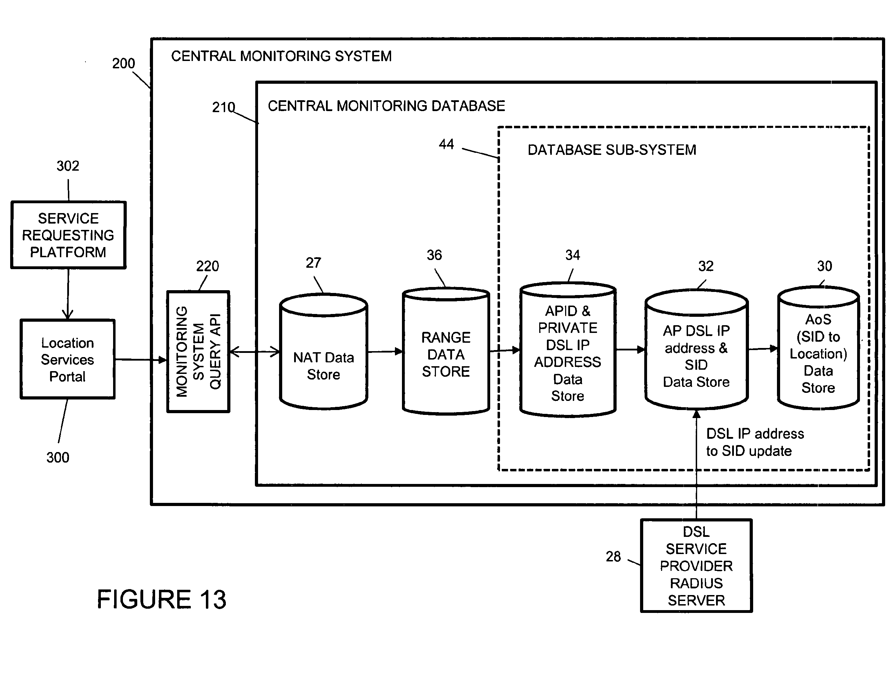

In the network infrastructure shown generally in the accompanying drawings, mobile devices 16 use a WLAN to gain connectivity over a DSL access line to the internet and have dynamically assigned IP addresses. Each AP providing a roaming access (or equivalently guest access) WLAN is capable of supporting a predetermined number of devices. A predetermined range of IP addresses are able to be assigned to the devices which roam into each such WLAN. Each IP address is dynamically assigned to a roaming device, however, the dynamic address assigned to a device is one which is allocated in dependence on the static and unique IP address assigned to each AP. For general enquiries, the location service system 300 (see for example, Figure 11B or 13) uses the public IP address of a device which will have undergone NAT translation, and possibly Port Address Translation as well.

The embodiments of the invention seek to provide real time location for access points which may be moveable.

A direct or indirect service is provided by the location service system 300 in which the device whose location is requested or third parties who are aware of at least the IP address of the device can be provided with location information. Exemplary third party services include mobile advertising, travel and tourist information services and the like, and any location and presence-based or modifiable services. For example, services which use information indicating the number of devices within a WLAN are provided in one embodiment of the invention. Such services include crowd control within a predetermined number of WLAN areas of network coverage. Also, a service which indicates the number of devices headed in a particular direction can be provided. This type of information and facilitates crowd-control and allows public services to ease congestion after mass-participation events. It is also useful to be able to locate people, for example, persons may have locatable devices yet not be capable of determining their own whereabouts or be unable to due to their mental or physical capabilities.

In a communications system in which a device location can be determined based on the physical location of a network access point which assigned that device a service address, such as an Internet Protocol service address, as the device moves from the service area supported by one network access point to another network access point, the service addresses assigned will be within a predetermined range of IP address assignable in association with the use of a particular access point identifier. The determination of the access point identifier enables a look-up operation for the address for service associated with that access point identifier, which enables the device location to be determined. This information is collated within the communications network.

A system suitable for tracking the location of a device roaming in an open-access wireless local area network is described in the inventors' related patent application, European Patent Application EP 1025101.8 filed on 30th September 2010, entitled "System and method of tracking device location in a communications network".

The system described enables location information over a large geographic scale to be collected and stored in a collated form which enables a device location to be fixed to within a short-range WLAN, for example, one with a range of a few metres or 10s of meters, and to tracking the location of this device in real-time. In one embodiment, a method and system for determining the location of a device is described which seeks to fix the device location to within one or more short-range WLANs. This can resolve the location of the device to a street address and the surrounding range of a few metres or 10s of meters from the location of the AP(s) providing the WLAN(s) the device has associated with and/or is using.

A monitoring system according to the invention is arranged to provide location information indicating a particular device's location and/or movement to a location-service requesting platform or directly to the requesting device. The location-service requesting platform in this invention comprises a web-server to which a device whose location is to be determined has sent a connection-request.

In packet-based communications networks such as those which carry internet protocol (IP) traffic, to enable more devices to make efficient use of the IP addressing scheme network address translation (NAT) is applied within the communications networks. NAT partitions the addressing domains, so that whilst an IP address will always resolve uniquely within any one addressing domain, reuse of the same IP address is possible in different domains. This creates an inherent problem when trying to resolve a packets IP address to a particular source, as the source IP address is not directly determinable if any NAT has occurred. Port Address Translation (PAT) may also need to be addressed when a device establishes a data flow with a remote data server. PAT involves a single or small block of IP addresses being shared across lots of clients and is used by some networks in overload conditions and by others on a permanent basis. PAT presents similar problems to NAT where used.

Telecommunications networks collate data on a massive scale to enable appropriate authentication, authorisation, and accounting functionalities to be performed directly for their own clients and for other service providers who use the telecommunications network infrastructure. Wireless communications networks collate data differently due to the mobility of the devices using the network and services provided over the wireless communications network infrastructure.

Many network architectures are known in the art which enable data interception to occur. Such schemes amass traffic on a huge scale and are usually configured so that either the content of the data can be monitored or the quality of the communications service the device generating the data is using and how this is affecting data transmission can be assessed.

The location service provided by embodiments of invention use the location of the network access point which has assigned a device its communications source address as a proxy for the device location. The access point provides a WLAN which is capable of providing connectivity over an access network to a plurality of devices. Typically such WLANs use short range communications protocols such as 802.11(WiFi) or 802.16 (WiMax) and can support a limited number of guest access (or roaming) devices.

Some APs may be mobile, for example, a service subscriber may reuse an access point when they move to different premises. However, each time an access point renegotiates a connection over the access network the ServicelD it is uses is verified as consistent with the address for service stored in the network in association with that ServiceID and an identifier for the AP (e.g. the AP's media access control (MAC) address).

Traffic from a roaming device is distinguished from the traffic generated by a device using the credentials of the service subscriber of the access network connection used by a particular AP. All traffic generated by roaming devices is sent over a secure connection separately from the connection used by traffic generated by devices which use the credentials of the service subscriber to authenticate their access. A secure connection may be provided by using a secure tunnel for example, an IPSEC tunnel, from the AP to a suitable platform for terminating a virtual private network (e.g. a VPN node) within the network.

All traffic originating from any roaming device passes through the IPSEC tunnel, including signalling traffic which is generated prior to the device seeking to use the WLAN for accessing the internet and/or prior to authentication. If more than one device is roaming in the same WLAN it will share the same secure connection.

Authentication traffic is forwarded to an appropriate authentication platform uses the secure communications link and, until use of the connection service by the roaming device has been authorised, non-authentication traffic is blocked at this point so that it does not propagate further in the network.

Prior to authentication requests and/or authorisation, traffic which is generated and which propagates to a monitoring system enables device location information to be generated and stored by the monitoring system. The type of traffic generated prior to authentication is mostly signalling associated with the AP seeking to allocated/reserve an IP address for the device its network which is intercepted at the termination point of the VPN. The monitoring system which receives this traffic processes it to extract information extracted about the device and the wireless access point being used, although it may need to wait until authentication is requested to capture user credentials for the device. From this information, it is possible to determine the geographic location of a particular wireless access point, device, and even the user of the device. The details of the device and/or user identifiers which are collected via the monitoring system may be encrypted for data protection before being appropriately stored. The stored data in one embodiment includes information enabling the identification of relevant third parties, such as internet service providers, which is collected as ServicelDs along with any traffic.

Even if a WLAN is provided by an AP which has relocated to use a different access network connection, as the AP establishes its connection over the new access link the new address for service is updated to associate this with the ServiceID the AP is using. The ServicelD associated with a DSL connection, for example, is determined by the DSLAM ports via which the AP has established an initial layer 2 point to point connection with an access server for communicating its authentication credentials to the network. In this way, the network operator can be made aware of such a move when the AP powers up or for some other reason negotiates a DSL session over the access network and can store this information in an appropriate data store which associates an appropriate identifier for the AP and/or the ServiceID for the access network connection service an AP uses with an address for service (AoS) providing location information. This provides a means of more accurately tracking devices through their association with such APs in real time within such communications systems.

Residential scale wireless LANs are often provided by wireless access points which use either integrated or separate access network connectivity devices, such as cable, optical or copper-network modem type devices. Broadband connectivity bandwidth is provided by the latter type of device establishing some sort of DSL type of connection to the local exchange. The term "wireless access points" or "access points"(APs) is used herein to refer to both the WLAN AP device and to the network connectivity component alike, regardless of whether both functionalities are implemented by the same platform or by different devices suitably connected.

The invention relates to wireless APs which are configured to provide WLANs which support roaming usage, i.e., usage of the network provided by devices other than those which are authenticated for access using the service credentials associated with the subscriber whose access point is providing the network access. The term "roaming" is used both where a device is maintaining its connection as it moves between WLANs as well as to devices which remain as "guests" within a particular WLAN.

The BT Home Hub™ is an example of an access point providing a WLAN offering guest or roaming access to roaming devices which have WLAN connectivity capabilities. The Home Hub™ is an example of a type of open WLAN access point which provides a separate network SSID for usage of WLAN by devices which are not associated with the service credentials of the service subscriber whose access point is providing the guest access. The BT FON™ services is an example of a WLAN service which enables device roaming in any WLAN provided by a roaming service subscriber to other subscriber's devices. The traffic streams from subscriber devices using the "private" subscriber SSID network and traffic streams from guest devices are separated into two paths which enable usage by devices which are associated with the subscriber's credentials to be separated from devices which are not.

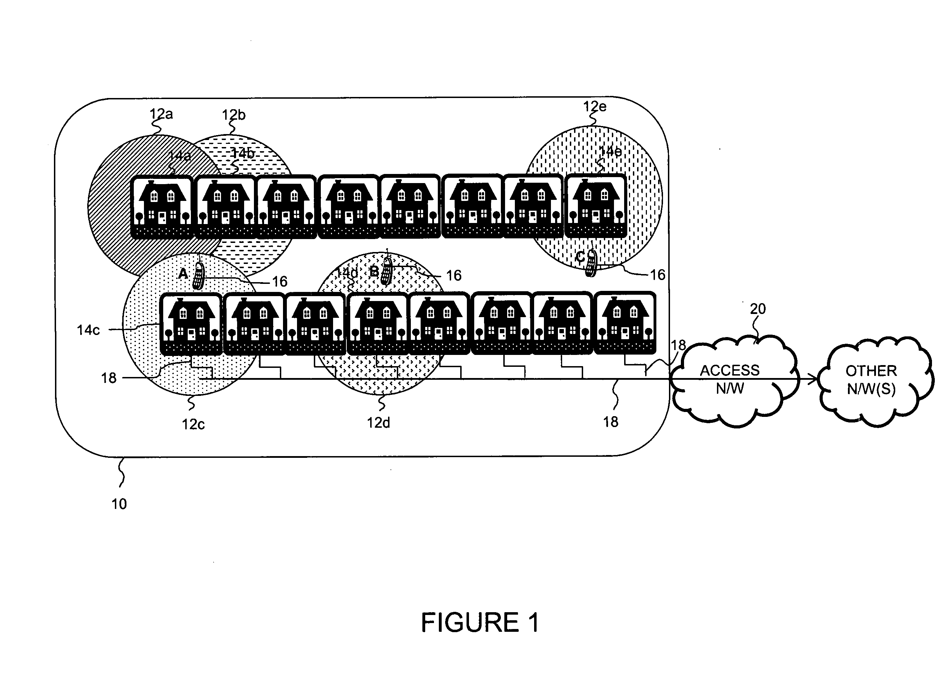

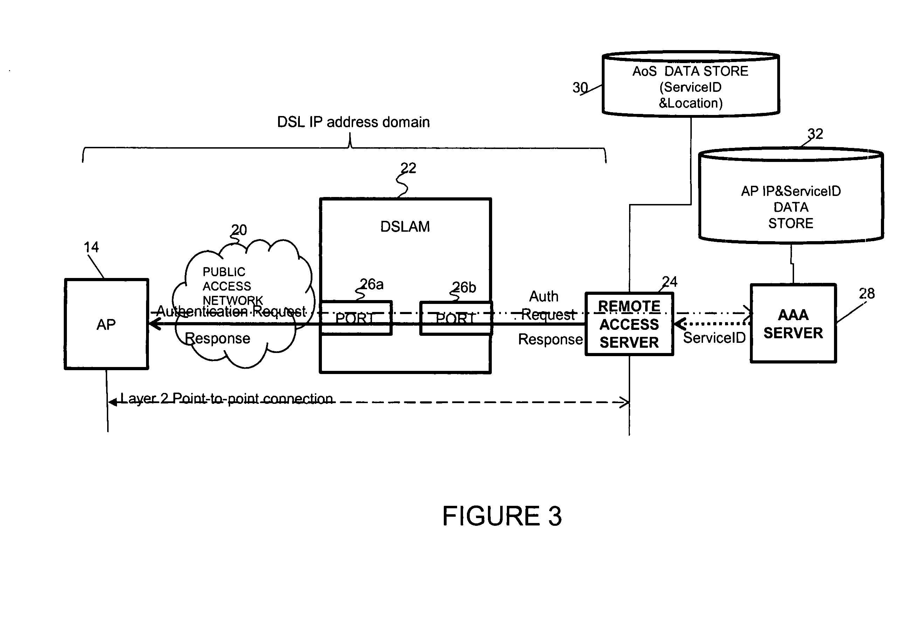

Figure 1 shows schematically a communications system 10 comprising a plurality of short-range wireless local area networks (WLANs), for which five are shown in this exemplary embodiment. WLANs 12a,..12e are provided by wireless access points (APs 14 - not shown in Figure 1, see Figure 3) which are located within a plurality of residential premises. As shown in Figure 1, each of the APs 14a,...,e is configured to provide an open-access wireless communications network service to roaming communications-enabled devices, one of which, roaming device 16 is shown at a plurality of locations A, B, and C in communications system 10. The WLANs may cover separate or overlapping areas.

In the embodiment of the invention shown in Figure 1 and described later herein below, each of the access points 14a,...,e is configured to use a Digital Subscriber Line DSL-type of communications link 18a,....,e for example by integrating or being connected to an appropriate DSL modem type and the identifier for each AP may be associated physically with the modem component of the AP. The DSL-type communications links 18 are transported to share a common access line over public access network 20 to the Digital Subscriber Line Access Multiplexer (located at the nearest aggregation point/local exchange. If optical or another forms of communications infrastructure is available for use by the AP, the AP may be provided with alternative modem type functionality to use other appropriate communication protocols for access to the nearest digital exchange using these communications links.

As mentioned above, the term "roaming device" refers the device using a different set of WLAN connection credentials from that of the "home" user's devices (which, for example, can use a set of credentials to utilise a private WLAN connection). A "roaming device" may in fact be within its "home" LAN but have associated instead with the public WLAN and not private WLAN that the AP provides. Accordingly, the term "roaming device" does not exclude the device from being within the "roaming" device's home or native WLAN, for which it is configured to associate with the private WLAN that particular AP provides, if that device has instead associated with the public WLAN instead.

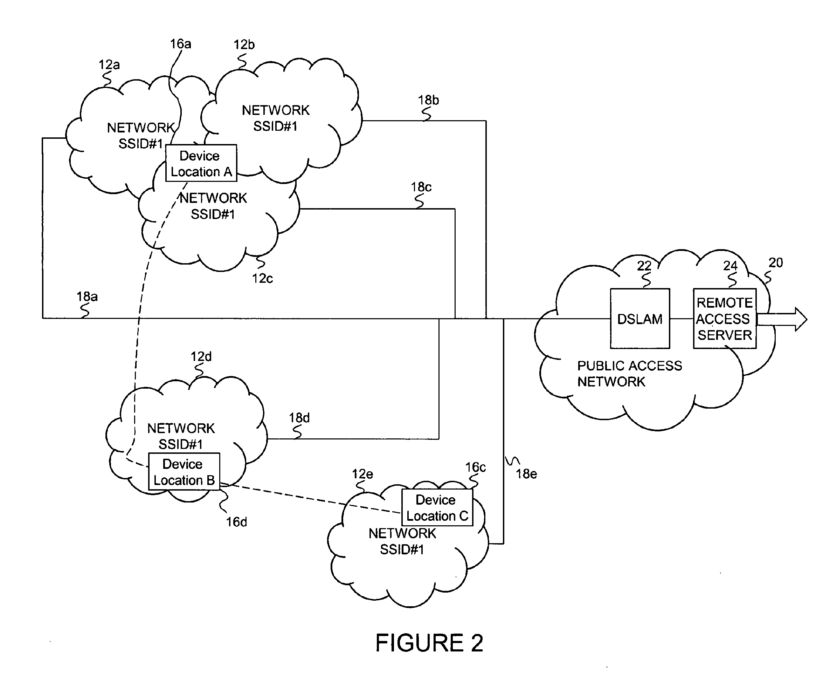

Figure 2 shows schematically the network coverage provided at each of the locations A, B, and C shown in Figure 1. In Figure 2, when the roaming device 16 is at location A, it receives beacons from networks with service set identifier SSID#1 from the access points provided at premises 12a,12b, and 12c respectively. At location B, it receives beacons from the wireless network with service set identifier #1, and at location C it receives beacons from another wireless network with service set identifier #1. The Service Set Identifier ("SSID#1") identifies a wireless network as one providing open-access to appropriately configured wireless communications-enabled devices, such as device 16, however, in alternative embodiments of the invention, some or all of the SSIDs each AP offers to roaming devices differ.

As shown in Figure 2, each of the open-access networks 12a,...,e provides connectivity to one or more remote networks for roaming device 16 using a digital subscriber line (DSL) communications link 18 over the public access network 20. The DSL communications links 18 are aggregated at a suitable link-access device providing an aggregation point for multiple subscriber lines, for example, at the DSLAM 22 at the local exchange. DSLAM 22 aggregates data traffic from a plurality of subscribers for forwarding to a switch or router over a suitable multiplexed connection using a communications protocol such as, for example, Frame Relay, ATM, or Ethernet to a remote access server (RAS) 24.

Referring now to Figure 3 of the accompanying drawings, RAS 24 is configured to act as the logical network termination point when an access point 14 seeks to establish or re-establish its connectivity over the access network 20. AP 14 is configured to establish in use a layer 2 connection via DSLAM 22 with RAS 24. Responsive to this, the RAS 24 is arranged to verify that the correct DSLAM port is being used by a connection by verifying if the ServiceID associated with that port has a termination location which matches the address for service associated with the identity (the APID) of the AP which is trying to re-establish its connectivity, for example, the MAC address of the AP.

This requires RAS 24 to access an address for service (AoS) data store 30 using the provided ServiceID to determine if its AoS matches the AoS of the connection at the DSLAM 22. Each service subscriber's service identifier (ServiceID) functions as a broadband calling line identifier for the access link which connects that subscriber's AP 14 (as this provides the functionality which supports both the WLAN and DSL modem broadband connection). Each DSL broadband connection to DSLAM 22 over the access network 20 (as shown in Figure 3, the DSL line into DSLAM port 26a) is associated with a ServiceID. The AP is connected via DSLAM port 26b to RAS 24. The ServicelD for the broadband connection that AP 14 uses is the same ServiceID for the broadband connection if just the DSL modem used when no WLAN is being provided indicates which particular internet service providers communications service the AP 14 is configured to use, i.e., it indicates the service provider of the broadband service used by the AP 14.

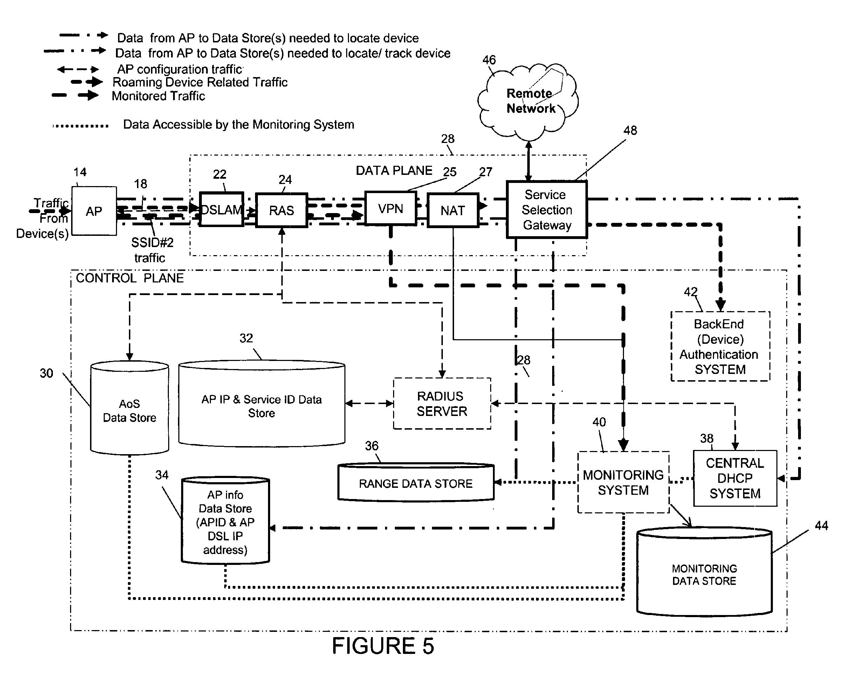

The AoS database 30 maps the Service ID for the service provided over each physical line connected to the DSLAM 22 to the physical address of the network termination point of that physical line (i.e., the ServicelD indicates the service subscriber's address from which the access link 18 is provisioned to the DSLAM 22). In this way, the RAS is able to associate the ServiceID used by an AP 14 with geographic address information, such as a street and premises number. The data stored in AoS database 30 is accessible to monitoring system 40 shown in Figure 5 (and also in Figure 13) using a suitably configured interface mechanism which enables a look-up to be performed based on a ServiceID sent in a look-up request, which enables the monitoring system to retrieve location information.

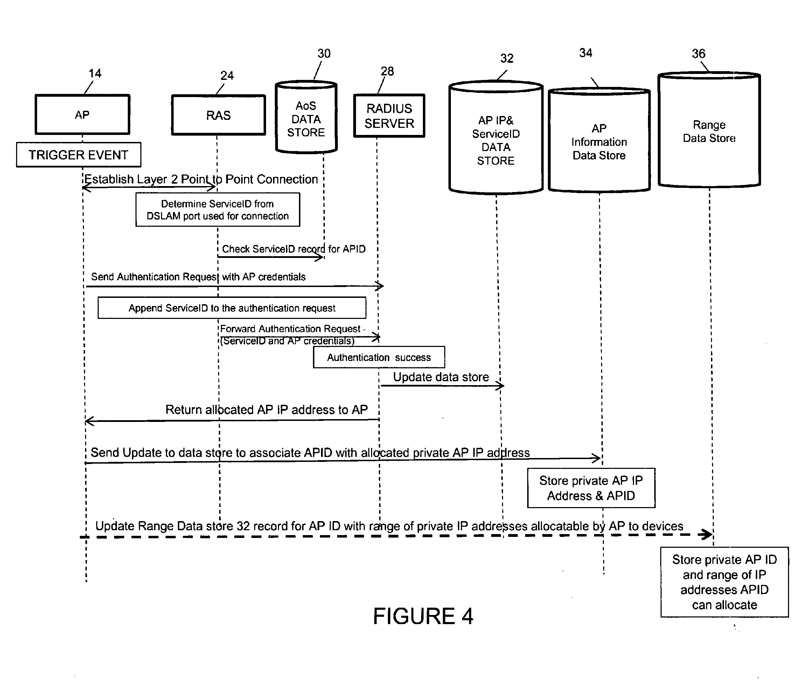

In order for AP to form a connection via which communications with remote networks can be established, the AP 14 must be authenticated for use of its communication service provider's communications network services. To achieve this, RAS 24 functions as a client to an authentication system for service providers, such as one which is implemented using what is known in the art as an AAA server system which implements Authentication, Authorisation, and Accounting functionality. An exemplary AAA server system known in the art comprises uses the Remote Authentication Dial-In User Service (RADIUS) communications server protocol and such a server system is shown in Figure 3 as AAA server 28 (also shown in Figure 4 as RADIUS server 28). RADIUS is a networking protocol which provides centralised authentication, authorisation, and accounting management functionality to enable remote clients, e.g., computers or mobile communications devices and computers, such as communications device 16, to connect to and use a communications network service.. The RAS 24 is also be referred to in the art as a Network Access Device (NAD), a Network Access Server (NAS), or a Broadband RAS (B-RAS, BRAS, or BBRAS)), and in the context of this invention may also function as a virtual private network (VPN) termination point for communications traffic generated by roaming devices using a open guest access wireless LAN AP 14 provides in addition to the private subscriber WLAN it supports.

The AAA or RADIUS server 28 is configured to authenticate connection requests which are forwarded by the RAS 24 from a requesting AP 14 over a suitable layer 2 connection, for example, PPPoE. As shown later in the embodiment of the invention described later herein with reference to Figure 5, the RADIUS server 28 is configured to query a central DHCP server to assign an IP address to the AP 14. The IP address assigned is then stored in a local or remote AP IP & ServicelD data store 32 with the ServiceID which the RAS server 24 has forwarded with the AP's access request.

Any suitable data structure may be used by the invention, including existing data stores. As such, data can be stored in dedicated data storage platforms arranged in a monolithic or distributed system (and may include duplicate sites (mirror sites) to facilitate data retrieval). Data may be stored in any suitable data record form known to those of ordinary skill in the art, especial forms which are optimised for high-speed data retrieval operations from large data sets.

The data records which store the AP IP and ServiceID information are in one embodiment different from the data records held in the data store which holds records enabling the ServicelD to be authenticated using the credentials the AP has provided. These credentials are forwarded by the RAS 24 and include, for example, a username and /or password for the subscription broadband service the AP is using. However, it is possible for a larger database to be generated with data records which include data extracted from these data stores, and the data stores even if different logical structures, can be supported by the same platform. In each case, however, a ServiceID searchable record is generated which is updated by the RADIUS server to show the most recently verified DSL IP address assigned to the AP 14. The DSL IP address is assigned directly by the RADIUS server to the AP 14.

If, however, the IP address has already been assigned by the RAS 24 and included in the connection request forwarded, then the RADIUS server updates AP IP & ServicelD data store 32 and may be configured to forward this information to the DHCP server 38 shown in Figure 4. Figure 4 shows schematically the signalling and message flows which enable AP 14 to establish a connection over the network over which communications can be established with remote networks using the communications service provided by the AP 14's service provider.

In Figure 4, the AP 14 is configured to send a connection request to the RAS 24 via DSLAM 22 after a suitable triggering event has occurred, such as on power-up of the AP or whenever it needs to re-establish its DSL connection. At this point the AP 14 is allocated an IP address on the DSL network. The location information which is determined at this point is the mapping of physical line location to the DSL IP address. For example, in one embodiment, a single common username/password is used on all APs using a residential broadband DSL connection. This means that the transaction with the BRAS knows nothing about the individual device until the actual location update about a specific AP occurs following a separate XML or other meta-data communication message (or similar transaction)_ is sent between the AP and the monitoring system after the broadband line has been authenticated. In this way, should a customer move their AP (Hub) to another valid connection in a different location, shortly after the AP has powered-up, the most recent and verified address for an AP is determined when the AP is authenticated to use the new broadband service. Accordingly, the location service system provided by the embodiments of the invention is able to locate changes of address for APs in a timely manner. If an AP moves location, the AP has to re-establish its connection to the DSLAM at the new location before it can be used, accordingly, the address associated with the AP will be a verified address.

As shown in Figure 4, on power-up, or following disconnection AP 14 establishes (or reestablishes) a suitable layer 2 point-to-point connection with the RAS 24. Following reconnection, an AP performs a similar access negotiation to establish connection information and service credentials. This provides information, such as, for example, the ServiceID, the DSLAM port number the request was received from, and a service subscriber "username" and "password" for the service connection used, and a Service Identifier (ServiceID) for the service connection the AP has been configured to use. The ServicelD the AP uses should correspond to the ServiceID associated with DSLAM port used if the AP has not changed its location since it was provisioned for providing DSL connectivity at a particular address. The RAS 24 then forwards information such as relevant connection information and the service credentials including the ServicelD for the requesting AP in an authentication request which is sent to the RADIUS server 28 so that a suitable IP address can be allocated to the AP 14.

The RADIUS server 28 performs a lookup operation using the ServiceID information provided on a local or remote RADIUS authentication database 32. The RADIUS server 28 verifies that the subscriber's username and password are valid, and may perform other security functions on the authentication request. If the RADIUS server 28 locates the serviceID in datastore 32 and the credentials provided in the RADIUS request provided show the AP is authenticated to use that ServiceID, it returns an access acceptance message and the DSL IP address it has allocated to the AP 14, with the return path being via the RAS 24. The IP address may be assigned using any suitable assignment process. In Figure 4, AP has been pre-configured with a range of roaming device allocable IP addresses and incorporates a local DHCP type functionality. The IP address range with which the AP has been associated is then stored in the network in range data store 36 in association with the APID used by the AP 14. If, alternatively, the AP is configured to use remote DHCP, then it will generate a query whenever it needs to allocate an IP address to a device 16 which it will send to a remote DHCP server 38.

The RADIUS server 28 is configured to update the AP IP address & ServiceID data store 32 with the IP address it has allocated to a particular ServiceID. Reverting back to Figure 4, if instead, a serviceID is not authorised for use by a given AP 14 by the RADIUS server 28, i.e., if the authentication or authorisation process fails, the RADIUS server 28 rejects the request and returns an access rejection message. The RAS 24 accepts or refuses the connection request from AP 14 based on the response from the RADIUS server.

The RADIUS server 28 may also return other list information from the same AP data record associated with that service identifier, such as for example, the subscriber's authorization and/or connection parameters to the RAS if this is also requested. A RAS 24 may also generate usage and accounting data which may be forwarded by the RAS 24 to the RADIUS server 28, which in turn may store or forward the data it receives to AoS data store 30 support billing for the services provided to the subscriber in some embodiments of the invention.

Referring now briefly to Figure 5, this shows a communications system arranged to provide location services and which incorporates a monitoring system (MS) 40. MS 40 is arranged to receive data as soon as a device responds to the beacon generated by an AP 14 which indicate the device is located within the WLAN 12 that AP provides. In addition, the MS 40 receives traffic generated by devices actively using the WLAN 12 provided by AP 14 for internet access and the like. The data received by the MS 40 is stored in MS data store (MSDS) 44. The MS 40 is supplemented with data available from one or more service or network management type of data stores, such as data stores 30, 32, 34, 36, NAT data store 27, DHCP system 38, and authentication system 42 described later herein below. MS 40 may use the information in its own MSDS 44 to perform look-up operations on these other management data stores to retrieve information which enables location services to be provided. For example, the AP IP & Service ID data store 32 is accessible by the MS 40 shown in Figure 5 using a suitable query interface which enables the monitoring system to perform a look-up type operation using an IP address to retrieve the ServicelD allocated to an AP 14.

When a plurality of APs are authenticated and a connection established between each AP 14 and the RAS 24, a plurality of the ports 26a, 26b of the DSLAM may be occupied depending on the number of different secure tunnels (to each respective AP) which are established to distinguish traffic from each AP's subscriber's device(s) from roaming device traffic. Each tunnel terminates using different virtual private networks (VPNs) or alternatively MPLS labels at a VPN node 25 which is located more centrally within the access network than RAS 24, for example, between the RAS 24 and the service selection gateway (SSG) 48 located in the core network. At the node where traffic emerges from the tunnel associated with a VPN configured for roaming device traffic, the traffic will be forwarded on to its destination and also to monitoring system 40 (as a duplicate or copy). Typically, the node which directs traffic for forwarding back to a roaming device over the tunnel will also be configured to forward the traffic also onto to the monitoring system 40. Both device generated and device addressed traffic can be received by monitoring system 40 in one embodiment of the invention.

Those of ordinary skill in the art will be aware that the VPN node providing the VPN termination functionality for the secure tunnel used for traffic generated by devices 16 that associate with an AP 14 may be hosted on the same physical platform as the RAS 24, and/or on the same physical platform that hosts a NAT functionality (shown in Figure 5 as NAT 27).

Once the AP 14 has been authenticated by the RADIUS server 28 to enable it to use a particular ServicelD to access an ISP communications service, the AP 14 is configured to send an XML message or similar type of signalling message to a special "AP information" data store 34 which contains the AP's APID and provides details of the private IP address the Radius server has allocated to the AP 14, the AP's DSL IP address. If this message is sent over the access network to the service selection gateway SSG 48 (shown in Figure 5) the source address of the AP from which it originates will undergo network address translation (NAT). Accordingly, to overcome the problem of identifying which AP has sent the message, the data records which hold the range of allocatable IP addresses for a device using a particular AP are associated with a unique identifier for the AP, similar to a Media Access Control (MAC) address, which is referred to herein as the "APID".

The APID data stored in data base 34 is available for access through a suitable interface mechanism by the monitoring system 40 shown in Figure 5. The interface mechanism enables the monitoring system 40 to perform a look-up request based on the APID to return the AP's DSL IP address, which is provided within the body of the message the AP sends to update data store 36 and so does not undergo IP address translation.

In one embodiment, the IP address range from which the IP address is allocated to a device is preconfigured on each AP 14, so that the AP is already aware of this information. In this embodiment, each WLAN provides a separate addressing domain for the devices within it. This range information is made network accessible by being stored in the AP information data store 34. It is provided within the body of the same XML message or similar signalling message that updates this store to indicate the APID has been allocated a DSL IP address.

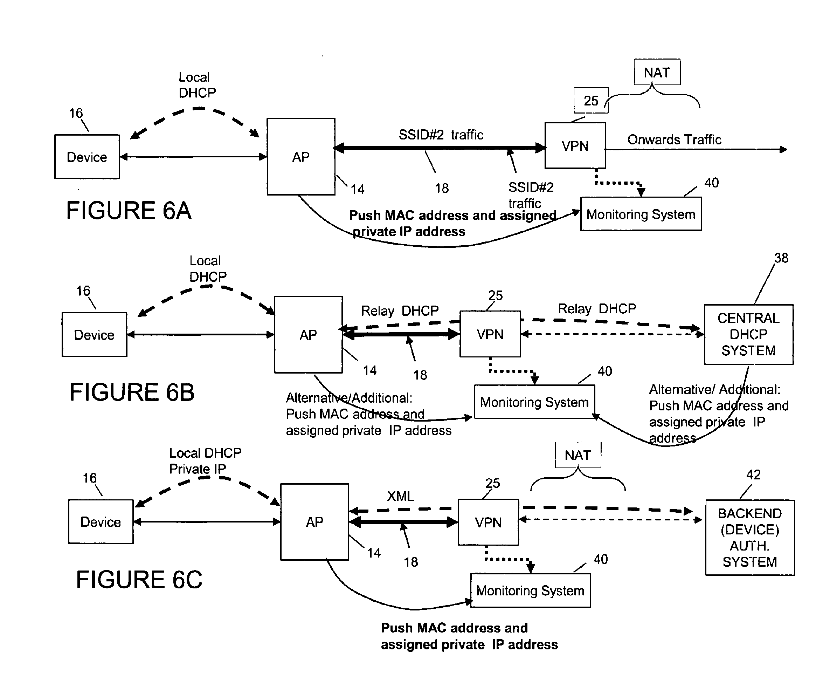

As shown in Figure 5, the AP 14 is configured to send the range of IP addresses which can be allocated to a device using that AP's network 12 (for example, using one of the mechanisms described later herein below with reference to Figures 6A to 6C), to another special "Range" data store 36 which stores the range of IP addresses that a given AP ID can assign to devices within its networks. The IP addresses which are stored in the data store 36 resolve in the access domain to the AP and the devices using its network, i.e., the private IP addresses which can be resolved to devices using the DSL access link 18. This enables the range of IP addresses which an AP 14 can allocate to roaming devices 16 to be associated with that AP's ServiceID, and enables a device to be associated with an AP if the device is determined to have a private DSL resolvable IP address which falls within the range of IP addresses associated with a particular AP. The data stored in data bases 34 and 36 is similarly accessible using a suitably configured interface mechanism by the monitoring system 40 shown in Figure 5 and may be processed by the MS 40 and stored in records associated with device or AP IDs in MSDS 44. Those of ordinary skill in the art will be aware that the service and/or network management data stores 30, 32, 34, and 36 have been indicated separately, and it is possible for the corresponding data records of a plurality or all of these data stores to be subsumed into a single data record and hosted with the monitoring system's data store 44, in any suitable manner capable of supporting the amount of data involved.

Figure 5 shows schematically how the monitoring system 40 accesses several service and/or network management data stores to retrieve data and populate its own data store 44. Network address translation (NAT) of IP addresses and/or port address translation (PAT) is managed by the MS 40 having access to the data records of the NAT node 27 from which data store both NAT and PAT private/public IP address mappings can be determined.

In Figure 5, AP connection configuration traffic is shown by a fine dashed line. An indication of how the AP makes available in the network data which associates a device's private DSL IP address (which is the IP address which is resolvable over the DSL access link 18) with its own APID, and an indication of how the AP makes available over the network data which enables the AP's own private DSL address to be associated with its APID are shown using a dot-dash thick line. Figure 5 also shows using a thick dot-dot-dash line how the AP may update the DHCP server to indicate the address it has allocated to a device in a WLAN the AP provides. By enabling the DHCP server to know this information, it facilitates sharing this information with the monitoring system and enables the device to potentially be tracked over a larger geographic range (i.e. over several WLANs) by the monitoring system 40.

The various data flows via which data is pushed to or pulled by MS 40 into MSDS 44 are shown by heavy dotted lines. The roaming device traffic generated when the device which seeks actually use the roaming service the AP provides is shown as a heavy short dash.

Referring more generally to Figure 5, the communications system 10 includes a monitoring system (MS) 40 arranged to collate data which is either pushed to the monitoring system or which is collated by MS 40 interrogate various data stores. As shown in Figure 5, a successful AP 14 connection request generates traffic shown by the thin dashed line which results in a ServicelD being associated with the AP's IP address in data store 32. The AP 14 is then able to populate data store 34 to associate its AP ID with its IP address (which may change each type the AP establishes a connection over the access network), and data store 36 which associates the AP IP address with the range of IP addresses that AP may allocate to devices.

As shown in the system of Figure 5, when a device 16 associates with an AP 14, it generates traffic which enables an IP address to be assigned to the device. If the device has been suitably configured, the allocation of an IP address results from this association, and does not require the device to have been authenticated to access the roaming service as shown in Figure 5 by back-end authentication server system 42.

The traffic which is received by the AP 14 over the open-access roaming or guest WLAN the AP 14 provides is forwarded via the RAS 24 over a separate secure tunnel providing a virtual private network to separate this traffic from the traffic which is generated by devices configured to associate with the private WLAN the AP provides. The AP is configured to automatically forward all traffic received using its roaming service to the VPN node 25, which is configured to route the VPN traffic from roaming devices through to the monitoring system 40, either on a divert or by duplicating the traffic flow it has received over the VPN from the roaming device 16. This may comprise call signalling traffic, signalling traffic when the device seeks to access a web-page, or traffic generated by the device launching an application prior to authentication.

Post-authentication, in one embodiment, not all roaming traffic or roaming device bound is necessarily duplicated at the network end of the termination point of the secure communications link. In Figure 5, the traffic flows which are duplicated are signalling traffic flows generated when a device 16 associates with an AP 14 and is allocated an IP address.

Also shown in Figure 5 is an additional traffic flow which the AP generates in some embodiments of the invention in which it updates the DHCP server 28 with the IP address it has allocated to a device 16. Not shown is the data flow which may occur if the AP needs to request an IP address from the central DHCP server 38 to allocate to a device, and the resultant communications between the DHCP server 38 and the AP 14.

Both local and remote DHCP IP address allocation could result in the DHCP server 38 updating its records to store a device identifier ("DeviceID") for device 16, for example, a MAC address associated with the device which is stored in association with the IP address allocated to the device 16.

In one embodiment, therefore, it is possible to search for a device using its MAC address which will not only enable the associated IP addresses (private and if actively being used public) but also the device location. The data stored may be pulled by the monitoring system from the DHCP server 38 in some embodiments. In the best mode currently contemplated by the inventors, the device IP and MAC address are suitably pushed by the DCHP server 38 to MS 40 in real-time. This enables MS 40 to update MS DS 44 with the new IP address for a device with a given MAC address in the record for that device MAC with a time-stamp. Alternatively, the AP 14 may directly update the monitoring system 40 using XML or a similar communications protocol.

Figures 6A, 7A, and 9A show schematically how if DHCP service address allocation occurs at the network edge and NAT is used within the core network, a user is only identifiable after they log in to the roaming service. In Figures 6B, 7B and 9B, DHCP relay is used which means that user can be identifiable before they log in to the roaming service, depending on where NAT occurs in the communication system. In Figures 6C, 7C and 9C, DHCP occurs at the network edge but as the WLAN AP provides additional data to the core by sending an additional message it is still possible to identify a user even if NAT has occurred, and this is also possible before the user has logged in to the roaming service.

Figures 6A, 6B and 6C show various ways of distributing addresses to a roaming device 16 or use in a communications system 10 according to various embodiments of the invention and the elements shown retain the numbering scheme of Figure 5 where appropriate.

In Figure 6A, after a roaming device 16 has associated with a WLAN AP 14, for example, by responding to a beacon from the WLAN AP 14, the roaming device 16 automatically requests an IP address from the WLAN AP 14. The IP address request can be implemented, for example, by sending a DHCP IP address request to the WLAN AP 14. The WLAN AP 14 responds by locally allocating an IP address to the roaming device 16 from a range of local IP addresses it is configured to distribute to roaming devices. The IP address allocated may be a public address in that it can be uniquely resolved outside the WLAN associated with that WLAN AP 14 to a unique device, but usually one or more layers of network address traversal (NAT) will be used to enable reuse of the IP address space.

Accordingly, after an IP address has undergone NAT translation, the monitoring system 40 must interrogate the NAT data store to determine what NAT translations have been implemented. Thus whilst any roaming traffic originating from the access network received at monitoring system 40 can be resolved directly if it is diverted to the monitoring system with its original IP address, if it has undergone NAT traversal at any point prior to its reception by the monitoring server, MS 40 needs to verify the translation at the relevant NAT servers along the path the packets have taken. As shown in 6A, therefore, after AP 14 has assigned an IP address to a roaming device, the AP 14 pushes the device MAC address and the IP address assigned to the monitoring system 40 using a suitable messaging format. The IP address assigned in this way is the IP address which will resolve over the WiFi access network domain before any NAT has occurred. This device IP address is also referred to herein as the private IP address for the device.

In Figure 6B, the roaming device 16 generates a local DHCP request. In this embodiment, the WLAN AP 14 relays the DHCP request over the secure communications tunnel over access link 18 to the VPN terminating node 25. VPN node 25 sends a duplicate of all traffic received on the port associated with roaming device traffic including the DHCP request traffic to MS 40. VPN node 25 also forwards the DHCP request towards an appropriate service selection gateway (SSG node 48 shown in Figure 5) which forwards it on via the control plane to the central DHCP server system 38 which allocates an IP address responsive to the address assuming one is still available to allocate to devices using the WLAN 12 provided by the AP.

VPN node 25 is automatically configured to copy traffic received from and sent using a secure communications tunnel over one of access links 18 to WLAN access points 14 to the MS 40. MS 40 is configured to extract from received traffic data flow characteristics such as the source IP address used. Where the data has not undergone any NAT, the monitoring system 40 is able to determine the IP address of the roaming device 16 directly, alternatively, it may need to perform a look-up operation to determine from the NAT data store what private IP address is associated with what public IP address. In addition, the MS 40 receives data directly from AP 14 and/or from DHCP server 40 which enables a DeviceID for the roaming device 16 to be determined such as its MAC address. Finally, by accessing the service/network management data stores shown in Figure 5, the MS can determine the device location, and/or other information such as the user(s) of a device.

For example, as is shown in Figure 6B, the relayed DHCP request typically contains information such as a roaming device identifier, for example, a MAC source address for a roaming device 16, a WLAN AP identifier, for example, the IP source address of the WLAN AP 14. The monitoring server system 40 can associate such device and WLAN AP identifiers with the location of the WLAN AP 14 by determining to which broadband access service provider the WLAN AP with that MAC address is associated and/or the fixed or wireless communication line identifier that particular WLAN AP 14 is registered to use. If the device identifier (DeviceID) resolves to a type of device for which a user has account information credentials, it is possible to associate a particular user (as identified by the use of the account credentials) with a location and to monitor movements of the user as the device roams between networks.

This is possible even if the device does not attempt to use the networks for roaming services. WLAN AP 14 generates and/or forwards address request traffic for a roaming device 16 as soon as it associates with the WLAN. This traffic uses the secure communications tunnel over access link 18 to a termination point provided by the VPN node 25. VPN node 25 automatically forwards the traffic it receives on the ports associated with WLANS for roaming devices to a monitoring point 40. As shown in Figure 6B, in one embodiment of the invention the DHCP system 38 is configured to push the device MAC address (derived from the DHCP IP allocation request it has received) and the IP address centrally assigned to the device 16 to the monitoring system 40. Alternatively, or in addition, the AP 14 may push this information into the monitoring system 40. The IP address assigned in these ways is the IP address which will resolve over the DSL access network domain before any NAT has occurred. This device IP address is also referred to herein as the private IP address for the device.

In such systems, subsequent internet-bound traffic which contains the centrally allocated DHCP IP address is resolved through the VPN node 25 to a unique device. The device identity is determined by the MS 40 either receiving information pushed by the DHCP server 38 or by the MS 40 querying the DHCP server 38 to determine the identifying MAC address of a roaming device associated with a particular IP address in use.

VPN node 25 is configurable in one embodiment to copy in-bound traffic to roaming devices 16 (which would also use the secure link) and to forward a duplicated version of such in-bound traffic to monitoring server 40, i.e., both in-bound and out-bound traffic which uses a particular port on the VPN node associated with a roaming WLAN is forwarded to MS 40.

MS 40 processes each DHCP IP address request it receives forwarded by the AP 14 to extract the MAC address of a roaming device 16 and the particular WLAN AP 14. As mentioned herein above this can then directly be used to query service and/or network management data stores to extract location information for the AP 14 which serves as a proxy for the location of the roaming device 16.

This information is then suitably stored in a retrievable form by MS 40 in MS DS 44.

The DHCP IP response from the central DHCP server 38 to the roaming device 16 is then also intercepted, which enables the MS DS record to be supplemented with the centrally allocated IP address assigned responsive to the DHCP address request being processed by the DHCP server 38.

If the roaming device 16 subsequently requires authentication by a user, the WLAN AP 14 will forward an authentication request to the authentication server 42. In some embodiments, the user information detected is then separately associable with a previously stored MAC address for the roaming device 16 and from this, the location of the user of the device can be determined. This also enables the user providing the authentication details to be associated with the traffic generated by a particular roaming device 16 and for this traffic to be monitored based on the device's current IP address as that inbound traffic is being sent to a particular device using that current IP address at the monitoring server 40.

In this way, the traffic sent and received by a particular device whilst roaming in a WLAN, including an open-access WLAN, can be monitored and the geographic location of the device determined remotely in the network from the signalling traffic.

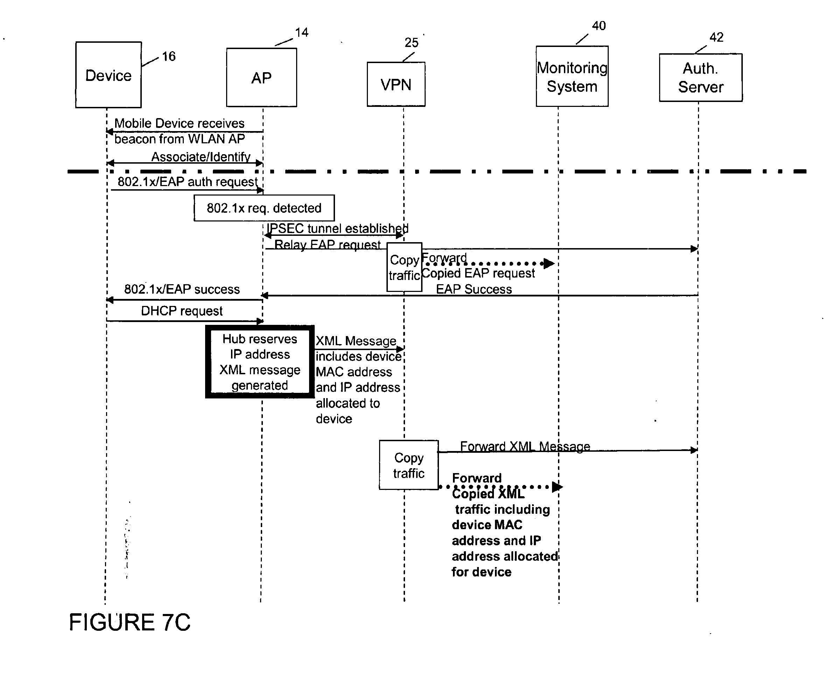

Figure 6C shows an alternative mechanism for associating authentication information for a user of a roaming device 16 with a private IP address assigned locally to the roaming device 16 by the WLAN AP 14. In Figure 7C, the WLAN AP 14 allocates a private IP address to a roaming device 16 from a range of possible addresses allocated to the WLAN AP. A roaming device 16 is not assigned the IP address until after the device 16 has been authenticated by authentication server 42. The authentication traffic which is forwarded from the device via the WLAN AP includes as its IP source address the IP source address of the WLAN AP 14. If the traffic forwarded undergoes NAT translation at some point prior to reaching authentication server 44, the authentication server 42 will not know the IP address has been assigned to the device as this will not be apparent from the authentication traffic it receives.

In order for the authentication server 42 to know which NAT translated IP address has been authenticated, so that only IP traffic from an authenticated device is allowed to access a remote network 46 such as the Internet, in one embodiment the WLAN AP 14 is configured to generate a separate authentication message, for example an extensible Meta-Language (XML) message. The authentication message contains sufficient information for the roaming device 16 to enable the authentication server 42 to make the necessary association of the NAT translated IP address of the authentication traffic originating from the roaming device 16 with NAT translated private IP address allocated by the WLAN AP to that particular roaming device 16, for example, the meta-data may include the roaming device Media Access Control (MAC) address, the WLAN AP MAC and/or IP addresses, and/or any other relevant information. As this traffic is intercepted by the monitoring station 40, it is also available to track the location and internet usage of a particular roaming device 16 and/or determine an authenticated user of a particular roaming device 16 whose traffic is being monitored.

Thus in Figure 6C AP 14 is configured to push out the MAC address and assigned private IP address to the monitoring system 40. As mentioned hereinabove, this enables a device ID to be used as a means to find the location of the device. As mentioned already hereinabove, the IP address assigned in this way is the IP address which will resolve over the DSL access network domain before any NAT has occurred. This device IP address is also referred to herein as the private IP address for the device.

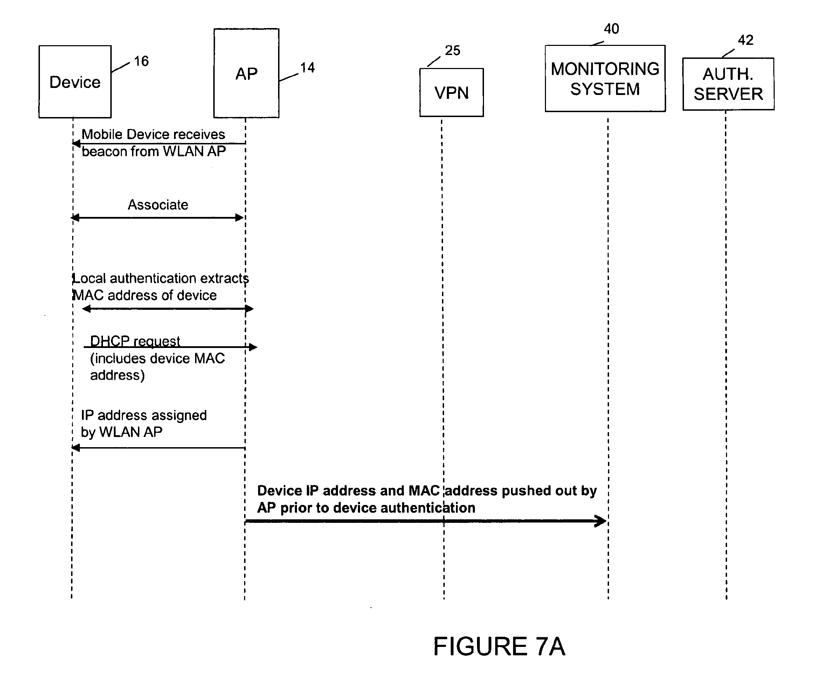

Figures 7A to 7C show the data flows which occur for the monitoring system to determine that a device is located within the range of an AP 14. Figures 7A to 7C, 8 and 9A to 9B all show how the monitoring system 40 collates information from the device traffic it receives from the VPN node 25. As shown in Figures 7A to C, 8, and 9A to C the exemplary data flows comprise messages, but flows of data packets are also intercepted and may be processed by MS 40. In the Figures, the message flows shown may omit some messages which are known in the art as essential to persons of ordinary skill where such messages would be apparent and are not relevant in the context of the embodiments of the invention described herein.

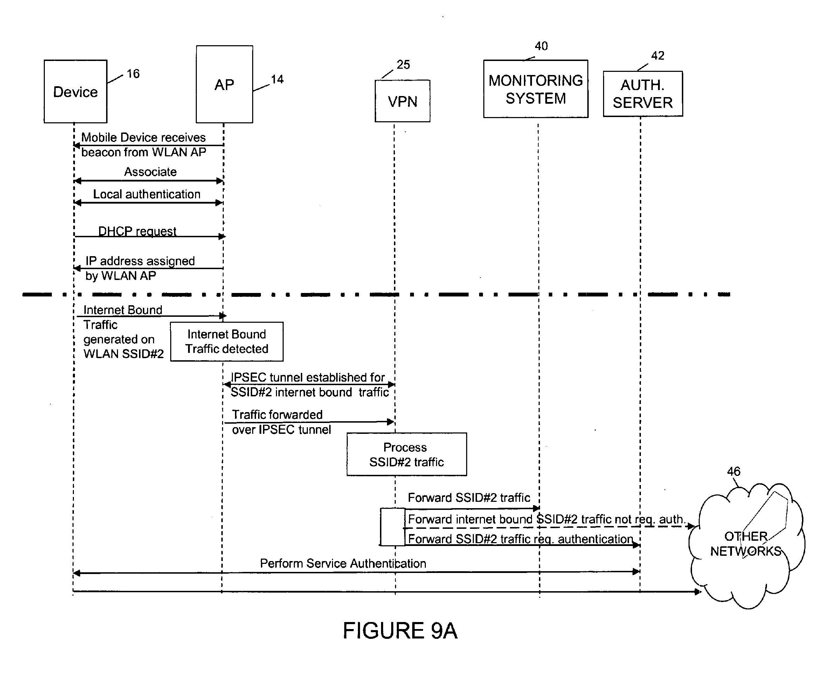

Figure 7A and 9A show a roaming device 16 detects a beacon from WLAN AP 14 and associates with WLAN AP 14. The device is locally authenticated automatically using any suitable automatic authentication procedure known in the art to enable cross WLAN authentication, i.e., processes which provide a roaming service across several wireless LAN access points post association are known in the art.. The authenticated device is then allocated an IP address by the WLAN AP 14 and can utilize the WLAN provided by AP 14. At this point, as Figure 7A shows, the AP pushes out the device IP address and the device MAC address to monitoring system 40.

Continuing now from the dash dot dot line shown in Figure 9A, at some subsequent point in time whilst the device 16 is still associated with the same WLAN AP 14, device 16 generates internet bound traffic. Such traffic may, for example, comprise a service request generated using a web-browser or by the device launching an application which requires internet connectivity. AP 14 receives traffic from the device over the wireless WLAN and determines from the destination IP address that the traffic is internet bound. The AP 14 then either establishes a secure communications link, for example, in the form of an IPSEC tunnel to VPN node 25 or reuses an already established link. VPN node 25 is configured to duplicate all traffic which it receives on a particular port associated with the secure link, i.e., with IPSEC tunnel and forwards this traffic to monitoring system 40. The VPN node 25 also forwards the received traffic on to SSG 48 which determines if the traffic from that device requires authentication before accessing the AP's service provider's roaming network so it can communicated with a remote networks 46 such as the internet or if it can automatically be routed over the AP's service provider's network towards remote network 46.

If authentication/authorization is required, the VPN node 25 intercepts the authentication traffic generated by the authentication server 42 which is returned over the same secure communications link associated with that AP (i.e., traffic which flows in the direction of the roaming device is also intercepted and diverted to the monitoring system 40). In this way, the monitoring system 40 is provided with information which includes the device identifier and information enabling the location of the device. The MS thus receives information even if a user of the device does not successfully complete their authorization or does not require authorization for a particular internet-bound service request to be delivered. The monitoring service will have updated its data stores when it was notified that a new IP address had been allocated to a device, which occurs prior to the device being authorised for access to the roaming service offered by WLAN AP 14 over the access network.

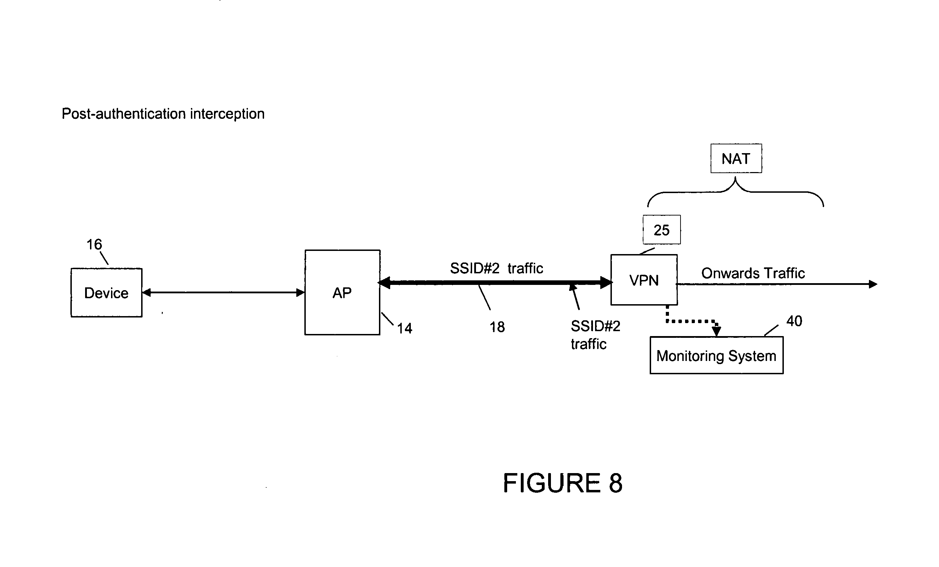

The monitoring server 40 does not need to access the authorization server and so there is no need to identify to the authorization server the identity of any particular user or device which is being monitored in this way. However, where service authentication is required, as all authentication traffic flows through the same VPN node, it is also possible to monitor and track this information when appropriate. In some embodiments of the invention, post-authentication all traffic forwarded by AP 14 received by VPN 25 may be copied to monitoring system 40, as shown in Figure 8.

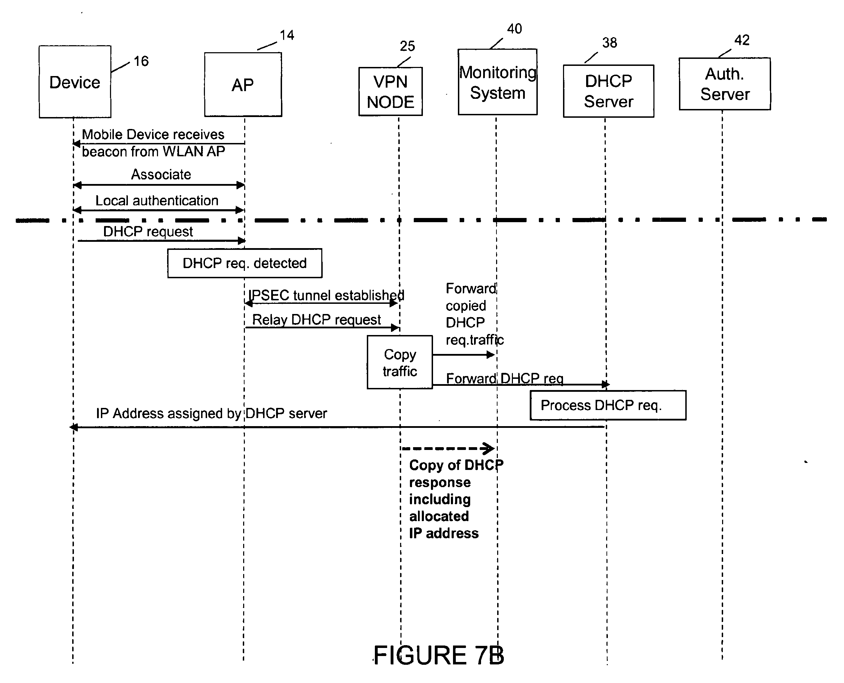

Figure 7B shows exemplary messages flows in an alternative embodiment of the invention. In Figure 7B, roaming device 16 detects a beacon from WLAN AP 14 and associates with AP 14. If the roaming device 16 has previously been authenticated by a user to use the roaming service, the roaming device 16 will then be configured to automatically perform local authentication. Local authentication occurs when a network is used in which no device authentication is required at this stage but sometimes username, service provider in the form of a network domain and password are requested. The roaming device then generates a DCHP request for an IP address which is detected by the WLAN AP 14.

In this embodiment, WLAN AP 14 is configured to relay the DHCP request to a central address server 46. Accordingly, when WLAN AP 14 receives the DHCP request, it uses an existing or establishes a new secure communications link, for example, an IPSEC tunnel, to a termination point at the VPN node 25. As shown in Figure 7B, WLAN AP establishes an IPSEC tunnel to VPN 25 and relays the DHCP request over this tunnel to the VPN 25 which copies the DHCP request (and any other traffic sent over the tunnel). One version of the copied DHCP request is sent to the monitoring server system 40. The other version is end to a central DHCP server 42 in the control plane which processes the request and responds over the same IPSEC tunnel via the WLAN AP 14 to assign an IP address to the roaming device 16. At this point, in the embodiment shown in Figure 7B shows, the AP either pushes out a copy of the DHCP response which includes the device IP address and the device MAC address to monitoring system 40, or alternatively, as was shown in Figure 6B, and not shown in Figure 7B, the DHCP server may be configured to push out this information to the monitoring system 40.

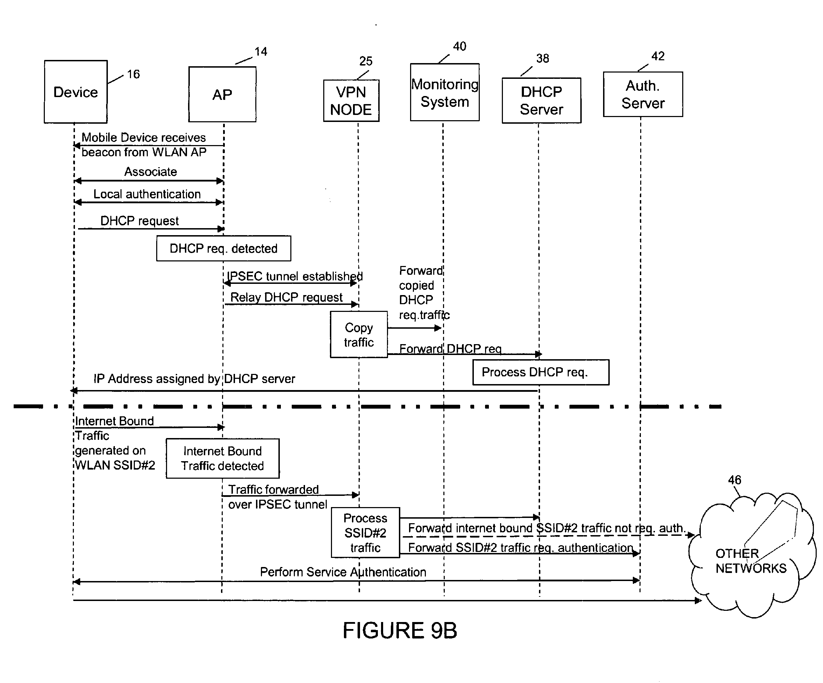

Continuing now from the dash dot dot line shown in Figure 9B,after having an IP address remotely assigned in this way, when the WLAN AP 12 detects internet bound traffic from the device 16 it can be forwarded using the same (or a new) secure link. If authentication is required for this traffic, this proceeds at this point in a similar manner to that shown and described before with reference to Figure 7A with all traffic sent over the secure link being intercepted at VPN node 25 and forwarded to the monitoring station 40.

As shown in Figures 7B and 9B, however, it is possible for the monitoring station to intercept traffic prior to a device generating internet-bound service requests or authentication information as well as the traffic associated with such requests and network activity. The address request (in this example, a DHCP IP address request), and any other signalling the device generates for which the WLAN AP 14 is configured to establish a secure communications link to the communications system 10 for and to forward over that link is capable of being monitored by the monitoring system 40.

Figure 7C shows another alternative embodiment in which a roaming device authenticates using the IEEE 802.1x communications protocol for port-based network access control (PNAC) It provides an authentication mechanism for a device to attach to a WLAN to provide a point-to-point connection only if authentication is successful. IEEE 802.1x uses the Extensible Authentication Protocol (EAP) over LANs (EAPOL) for IEEE 802 LAN technologies such as the 802.11 wireless communications suite. A port in the 802.1x communications protocol refers to a single point of attachment to the WLAN infrastructure such as a particular roaming device 16. The WLAN AP 14 authenticates a roaming device 16 using a remote authentication server 42 such as a host platform arranged to support the EAP and RADIUS (Roaming Authentication Dial In User Service) which provides a centralized authentication, authorization, and accounting management. EAP authentication is well known in the art and is not described further herein.

In the embodiment of the invention shown schematically in Figure 7C, the use of the 802.1x protocol for roaming device authentication enables monitoring point 40 to determine additional information from the unencrypted outer layers of the EAP over RADIUS authentication traffic sent over the IPSEC tunnel established by the WLAN AP 14 with VPN node 25 as well as from the XML message the WLAN AP 14 generates when the roaming device 16 requests an IP address.

As shown in Figure 7C, roaming device 16 detects a beacon from WLAN AP 14 and having associated with the WLAN the roaming device generates an EAP authentication request and sends this to the WLAN AP 14. The EAP authentication request is automatically triggered on association. In this embodiment, when the WLAN AP 14 detects it has received an EAP request, it establishes an IPSEC tunnel to VPN node 25 via which the EAP request is relayed to a suitable authentication server system 42. The EAP request is duplicated at the VPN node 25 and forwarded to monitoring server system 40. As the EAP request is relayed from the WLAN AP 14 to the remote authentication server 42 its source address undergoes NAT translation. This means that the authentication system cannot authenticate IP traffic based on just the source IP address as the authentication system (and similarly the monitoring system) has only a NAT translated WLAN AP IP SA address. The monitoring server system 40 can be optionally configured to be triggered by the detection of an EAP request to monitor traffic generated by authentication server system 42 responsive to that EAP request. If the EAP request is successful, the roaming device 14 is authorized to use the WLAN AP 14 to send a local DHCP request to the WLAN AP 14.

The WLAN AP 14 then allocates an IP address for the roaming device 16 and generates a meta-data message in which its own address is replaced as the source address with the IP address it has allocated for the roaming device 16. This message is forwarded by the VPN node 25 to the MS 40. MS 40 is configured to recognise this type of message and extract from it the IP address of the device and the device MAC address.

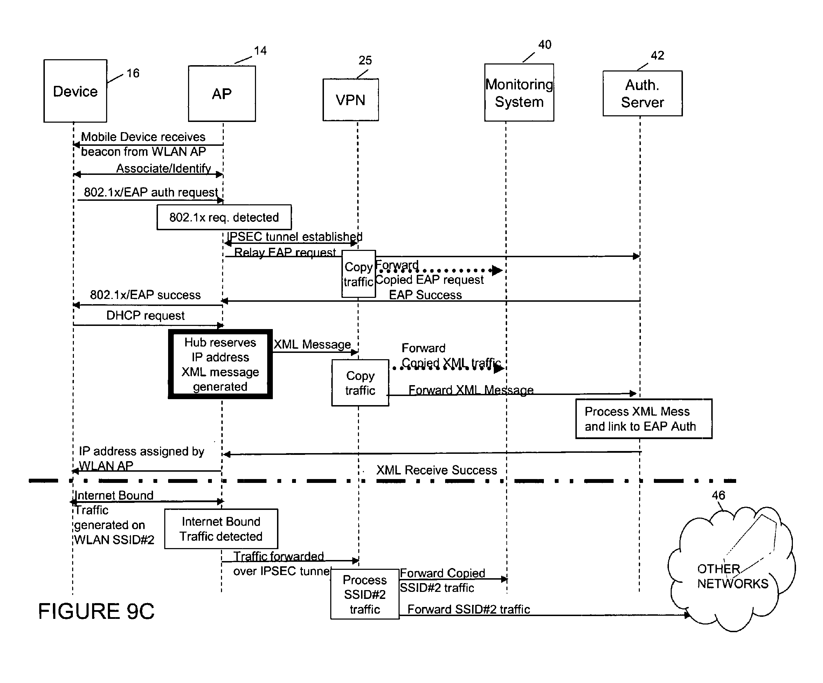

Continuing now from the dash dot dot line shown in Figure 9C, the forwarded XML message contains other device identifying information and enables the authorization server 42 to associate the NAT translated address of the message it receives from the WLAN AP 14 with the authentication information. This enables the communications system 10 to be configured to allow internet traffic from roaming device 16 to access a service provider's network to communicate with the remote network 46 based on the NAT translated source IP address of the roaming device 16. It also accordingly enables the monitoring station 40 to track traffic generated by the roaming device 16 and traffic sent to the roaming device 16 using the NAT translated source IP address of the device 16. The device identify information received by and stored by the monitoring system in one embodiment includes both a Media Access Control (MAC) address for the device 16 and the associated 802.1x credentials included in the metadata (e.g.XML) message which is pushed to the MS post authentication by the AP 14. The MS is configured to process pushed information such as the received metadata message to extract information such as source address, IP addresses, and any credential type data. The MS stores the 802.1 x credential in a suitable data record format in association with the current MAC address and private IP of the device 16 so that all three are combined and separately searchable if a look-up query is performed using a suitable monitoring system application programming interface on any of the monitoring system data stores 210, 44 etc, such as may be performed to provide a location service such as is described later herein below with reference to Figure 13 of the accompanying drawings.

Once the authentication server 44 has linked the NAT traversed IP address allocated by the WLAN AP 14 to the roaming device 16, it indicates to the WLAN AP 14 that the roaming device using that IP is authenticated to use the communications system 10 to access the service provider's roaming network service. WLAN AP 14 then releases the allocated IP address to the roaming device 16. Additional authentication may be performed at this point and/or the roaming device 16 is in one embodiment automatically enabled to access a remote network 46 without any prompts being generated for user input.

If the roaming device 16 is automatically authorised and authenticated for internet access using this type of EAP and XML based authentication, a user does not need to enter any additional account or authentication information when an application launched on the device 16 generates a service request requiring internet connectivity. This means that the data generated at this point does not need to be redirected to a so-called "captive portal" as is known in the art, as there is no requirement to halt access to the internet whilst authentication information is provided.

Applications which are provided on a device configured to automatically access web-services or otherwise request information (i.e., if the applications are configured to "pull" data to the device from remote servers even when roaming as a guest in a WLAN 12a,b,c,d,e offering roaming access) the traffic generated by the roaming device 16 or provided to the roaming device is distinguished from the traffic generated by the subscriber (or equivalently private or "home" WLAN user) of a private (or restricted access) WLAN provided by the same AP 14a,b,c,d,e, as the WLANs have different SSIDs and traffic is received using different tunnels. As such, the device activity and related information for roaming devices is capable of being remotely monitored within the communications system 10 by monitoring server system 40.

The above description indicates various ways of obtaining information by monitoring signalling traffic in a communications network which is generated by a device roaming from one wireless LAN to another wireless LAN as the device associates with the networks. The roaming traffic which is monitored includes signalling traffic. The devices use the secure tunnel reserved for roaming device traffic which is shared by one or a plurality of devices which are roaming at any given time within range of a particular wireless network. Traffic received by MS 40 is accordingly generated by one or a plurality of devices in each of a large number of WLANs. Within a given WLAN a plurality of devices can be operated by one or a plurality of different users (as an example, a user may have a laptop computer and a smart phone with WLAN connectivity, and an electronic book-reader all configured to associated with WLANs).

According to the various embodiments described herein, at the point where the roaming traffic separation imposed by the secure tunnel terminates, at VPN node 25, the traffic on each port associated with a secure tunnel is duplicated and forwarded to MS 40. The VPN node 25 is configured to duplicate only certain types of traffic in one embodiment. Selective duplication may target the type of traffic, for example, duplication of signalling traffic, such as signalling traffic generated by the association of a device with an AP 14. Alternatively, just traffic to certain websites is duplicated. It is also possible, in some embodiments of the invention, to duplicate any traffic arriving at the VPN 25 which is to be sent via an AP 14 to a roaming device 16 over a secure communications tunnel over an access link 18, i.e., to monitor device bound traffic. It is possible to selectively duplicate and/or monitor just signalling traffic or the contents of selected packets. Unwanted traffic is discarded by MS 40.

The duplication is performed at VPN node 25 using any suitable mechanism and/or selection criteria and one version is forwarded to an appropriately configured monitoring system and the other version forwarded onwards as appropriate for its purpose. The monitoring system 40 processes the received traffic to determine appropriate information to populate the data records of MS DS 44. For example, information which enables the identification of the device and/or the location of the wireless network access point and/or other information such as a user identifier and/or related user account information and/or traffic which is sent to or generated by the device and/or meta-data about the roaming device and/or wireless access point used and/or user of the device can be extracted from the data forwarded to the monitoring system. Typically such information may comprise a MAC address and IP address or IP address and port number used, and the AoS information together with a timestamp generated when the MS DS record was updated.

The signalling traffic which is monitored is generated by a roaming device includes signalling from devices which have previously associated with one or more of said wireless local area networks. In some embodiments of the invention, the signalling traffic is collected from devices have already been configured to be locally authorised to use the roaming service. In other embodiments, however, the monitored signalling traffic includes traffic generated before the device or its user has been authenticated and may include traffic generated during the assignment of an IP address.

As mentioned above, a roaming device 16 does not have to generate a request to use the roaming service to trigger monitoring of its signalling traffic as the wireless access point is configured to establish a secure link for certain types of traffic prior to the user authentication process being complete. Roaming device generated traffic which is generated after authentication is capable of being monitored by MS 40 but results in a larger amount of data being collated than is required to implement a device location or tracking scheme and such data may be discarded or stored in a separate data storage facility due to its volume. It should be noted that DHCP signalling will only be stored by MS 40 in embodiments where the AP 14 is using DHCP relay mode or if the DHCP server pushes information to MS 40 (or if the AP 14 pushes this information to the MS 40).

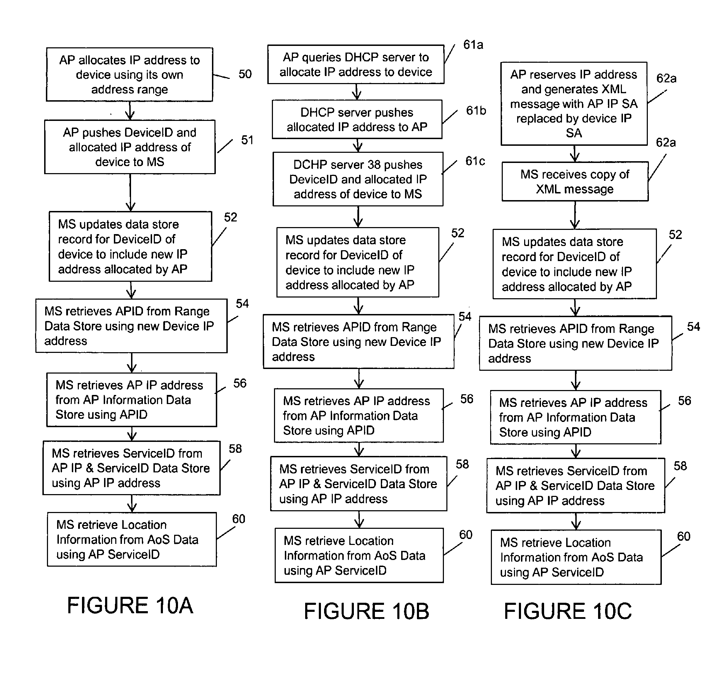

Referring now to Figures 10a, 10b, and 10c of the accompanying drawings, these show how the monitoring system 40 shown in Figure 5 uses its notification of when a device is allocated a device DSL IP address for use in the WLAN 12 provided by AP 14 as a trigger event for determining the location for that device based on the address associated with the ServiceID of the AP it is using.

In Figure 10a, when a device roams into an area in which an open-access WLAN is provided by AP 14, it responds to the beacons generated by the AP 14 and associates with the AP 14. This triggers the assignment of an IP address to the device by the AP from its pre-configured address range for allocating to devices using its WLAN connectivity (step 50). This causes the AP to push the device ID (e.g. its MAC address or a similar preferably globally unique deviceID) to MS 40 (step 51)

The MS 40 updates MS data store 44 to record the new DSL IP address allocated by AP 14 (step 52). The monitoring system 40 uses the device IP address to retrieve the APID of the AP 14 the device is using (step 54) from Range data store 36. This comprises checking (using any appropriate range checking process) if the IP address of the device is one within the range of IP addresses which are allocatable to devices using a particular AP14.

Once an AP 14 has been located whose allocatable IP address range includes the IP address of the device, the monitoring system uses that AP's APID to perform a look-up operation on the AP Information data store 34 to map this to an AP IP address (step 56). The retrieved AP IP address is used to perform a look-up operation on the AP IP &ServiceID data store 32 (step 58). If the AP IP address is found to match to a particular ServiceID, the monitoring system 40 can use the ServiceID to retrieve selected information from the service subscriber records from the AoS data store, including the address for service associated with a particular ServiceID, which provides an indication of the location of the device as being with the range of that AP's WLAN (step 60). If an AP's has a sufficiently low-range, this information may be sufficient to provide a useful fix on the device IP location. If a device is shown as having associated with a plurality of APs whose WLANs have overlapping areas of network coverage, any suitable triangulation techniques known in the art can be used to provide enhanced accuracy as to the device's location.

Figure 10B shows an alternative embodiment in which, as the AP 14 requests a central DHCP server 38 to allocate an address to the Device 16 (step 61a). Here the DHCP server 38 responses to the AP (step 61 b) and also pushes to the MS 40 the DeviceID (e.g. the MAC address) it has received from the AP 14 together with the DSL IP address it has allocate to that device (step 61 c). The steps then continue as for Figure 10A

Figure 10C shown an alternative embodiment in which, the AP reserves an IP address and generates an XML message which includes a device identifier such as the device MAC address and which includes as a SA for the message the device IP address instead of the AP's IP address as the SA (step 62a). The MS 40 receives a copy of the XML message (step 62b), and processes the message to extract the data it needs to update the MS DS 44 data record associated with the device MAC address to indicate the IP address allocated to that device (step 62c). The steps then continue as for Figure 10A.

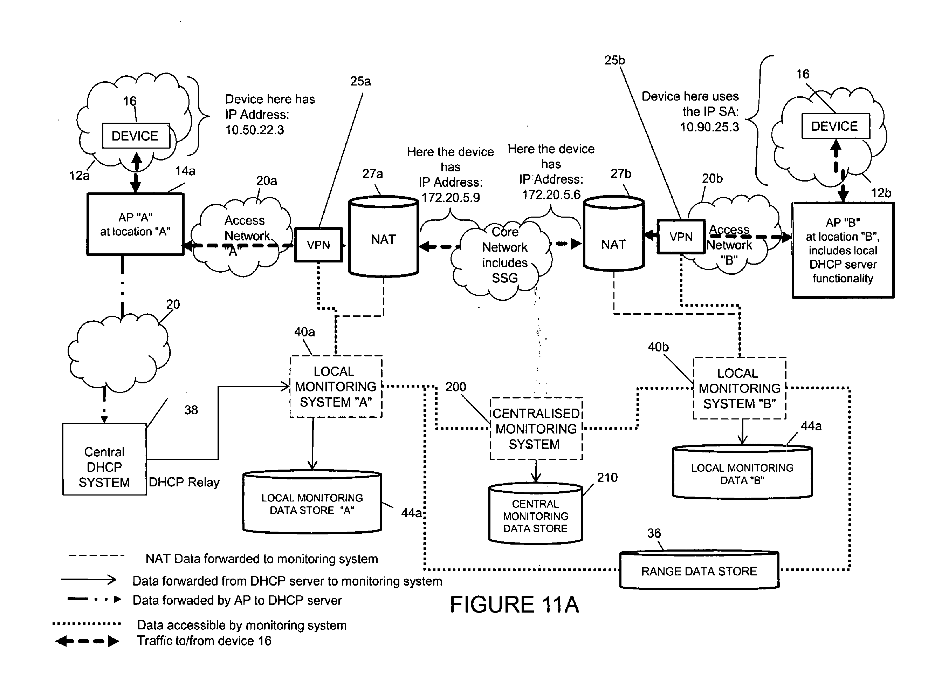

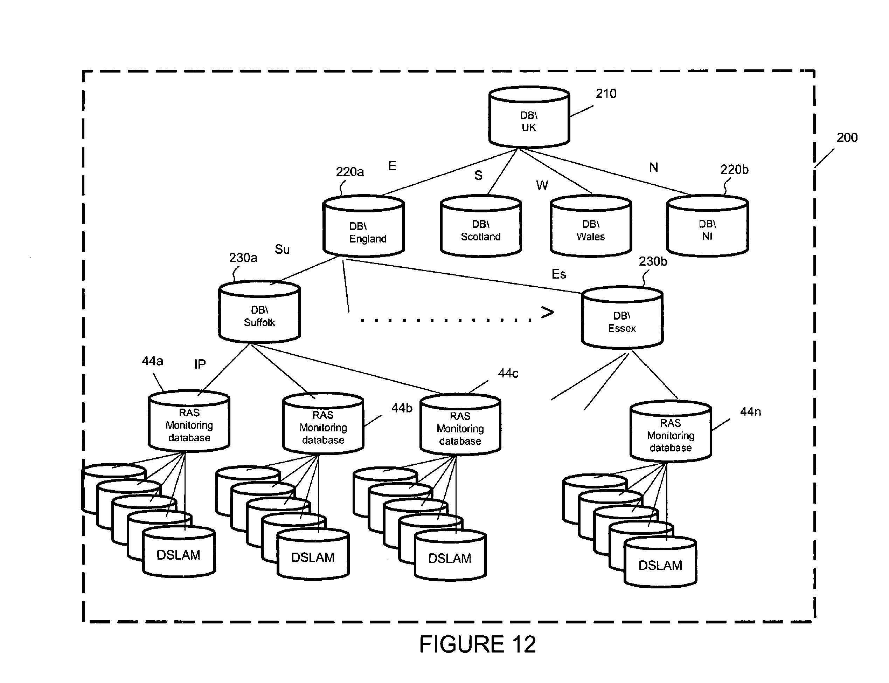

Figures 11A AND 11B show how local information gathered at locations A and B can be fed into a hierarchy of monitoring system data stores such as Figure 12 shows. This enables location information for devices collected locally can be centralised on a geographic regional basis which provides a wider scale of geographic coverage as the hierarchical level increases.

In Figure 11A, at location A, a device 16 with an exemplary DevicelD (MAC Address) of 00:16:cb:84:ab:e7 is allocated IP Address: 10.50.22.3: by AP "A" from its allocable IP Address Range: 10.50.22.1 - 10.50.22.7. The local area access network applies NAT at the first possible point after termination of the secure tunnel established for roaming or guest device traffic, i.e., just after VPN node 25 located after RAS 24.

At VPN node 25, all traffic received on a port which terminates a secure tunnel over an access communications link is duplicated and forwarded onwards towards its destination and to the monitoring system. In order for the monitoring system to determine the identity of the device 16 if it is provided with a pubic IP address or public IP address and port pairing, a suitable mechanism for the MS 40 to interrogate the NAT data store 27 is provided. This enables MS 40 to associate the local DSL IP address which is used as the IP source address (SA) for packets over the access network, and the NAT translation of the device IP address, i.e., the public IP address, known outside the access network connection domain (i.e., known outside the DSL service domain).

The NAT data store "A" maps addresses to the NAT IP Address Range: 172.20.1.1. - 172.32.255.255 and stores association of the private IP address 10.50.22.3 of device 16 with the NAT translated IP address 172.20.5.5, and this will be pushed down to the monitoring system "A" for storage in data store 44a. The IP address 10.50.22.3 is the IP address allocated by the AP 14 to device 16. The traffic generated in the course of assigning this IP address to the device in the VPN tunnel has the IP source address of the AP 14, which is the DSL IP address allocated by the central DHCP. The private WLANIP address is translated by NAT node 27 to a Public IP address valid outside the private network domain associated with the broadband connection over the access network. The connection between the AP and the end service is sourced from a unique IP port number, and thus the private IP address is translated to a public IP address which is associated with this port number to distinguish flows between devices whose public IP addresses are the same, i.e., the public IP address and associated port number of, for example, 217.30.90.100:32194 enables devices to be unique resolved using just their public IP address and the IP port used. Accordingly, a MS 40 is first updated with a AP IP address and Device MAC address and then via a message generated by the Central DHCP server 38 the associated public IP address of the device 16 with that MAC address.

In Figure 11A, two DHCP server functionalities are shown. One server 38 deals with the IP address allocation for the DSL network. The other server is implemented within the AP "B" and deals with IP address allocation on the public WLAN interface.

At location B the same device has IP address 10.90.25.3, which was allocated by AP "B". Similarly NAT at B maps traffic flowing from WLAN B with the IP address 10.90.25.3 to 172.20.5.9. Monitoring system B however captures this NAT information, and also stores it locally in its data store "B" 44b. There is a further level of NAT between the core network and the Internet before traffic is routed to the Internet where the non-routable private 172.20.5.9 address is NATed to a routable public IP address.

In the embodiment of the invention shown, each of the MSDSs 44a,b store for the monitored traffic flows they receive a DevicelD, the private device IP address, and NAT translation information pairing the private device IP address with a public IP address. Port information associated with the public/private IP addresses may also be stored. Location information may be stored and/or the AP IP, APID, ServicelD and AP Location information obtained by querying the various service and/or network management data stores 30, 32, 34, 36 described herein above.

If tracking is to be provided in real-time a TimeStamp is also stored. This is associated with the time at which the MS updated the record. Alternatively the time stamp may be the time at which the Device is allocated an IP address, in which case the time-stamp is not generated by the MS but is provided to the MS with the latest IP address information as each time a device moves its access point, it will be assigned a new IP address. In one embodiment, the device ID such as its MAC address is provided instead of/in addition to the IP address (or IP address/port number if PAT is used). Thus it is possible to track in real time the device movement using the device ID and the associated IP address addresses. In some embodiments, not all of data is permanently stored as for location and tracking purposes the deviceID and/or latest IP address, and AoS location information can be sufficient to provide a location service.

Figure 11B shows a central monitoring server system (CMS) 200 with its central monitoring system data store (CMS DS) 210, which collates the information it receives from a plurality of local data monitoring systems 40a,b, and location server 300 which uses a suitable application programming interface or other suitable interface to securely query CMS 200. By centrally storing records in which a DeviceID and location history is provided, either by previous entries or by previous entries associated with a time-stamp, it is possible to track a device by proxy by determining the location of the APs it associates with from location A to B to C even if these locations are geographically beyond the range of one local exchange.

The Device ID is also required as each WLAN A and B will allocate the device a different IP address, simply being able to associate a device's IP address with a location at any given time provides no continuity as the device moves between locations A, B, and C and from WLANs 12a to 12d to 12e, as the monitoring system will only be aware of the location of a device IP address for the duration the device is within the range of one of these WLANs. Examples of suitable DevicelDs for indexing such records include, for example, the Media Access Control (MAC) address and/or any other hardware-embedded or securely embedded device identifier of the device. For example, the DeviceID may be provided by a subscriber-associated hardware module such as a SIM card or the like of a type well-known in the art for enabling a mobile communications device to use one or more mobile communications service(s). In the best mode currently contemplated by the inventors, DHCP server 38 uses a MAC address as a Device ID to store in association with its allocated DSL IP address. If remote DHCP address allocation is used the stored address is the private IP address for the device, the IP address which resolves to the device 16 within the WLAN network and also over the DSL access link 18. If the AP allocates a device IP address, it will be unique within that WLAN but may not be beyond this.
Whenever NAT on a monitored traffic flow's IP address occurs, the monitoring system 40 must update a DeviceID record for the device which has generated the traffic flow to track the pre-NAT translated and post-NAT translated addresses to continue enable the device to be mapped to a valid location. As mentioned hereinabove, in Figure 10, local NAT server A updates local monitoring system 40a whenever it performs NAT, and local NAT server B updates local monitoring system 40B whenever it performs NAT.. As those of ordinary skill in the art will be aware, although only one level of NAT is shown in the drawings of Figure 11A, additional levels of NAT may be required before the public address domain is reached which are generally omitted from the description and drawings for the sake of clarity (an additional level is shown in Figure 11B by way of example). Generally, no matter how many levels of NAT are traversed, all levels of NAT will have associated data stores to which the MS 40 has access to.

Both monitoring servers push their data records to a centralised monitoring server 40c which stores data records of each monitoring server including the APID which has allocated a particular IP address to each deviceID, and the deviceID. As the APID is also unique, this ensures that even when two devices in different IP addressing domains are using the same IP address (as a result of the address domain separation imposed by the NAT process), the central monitoring system can still resolve each device using its DeviceID and the APID of the AP it is using, and hence determine the correct location of the device. Similarly, if PAT has been used, the IP address and port ID pairing is also be stored by MS 40. In embodiments where a DHCP server 38 stores the private IP address, this is stored with the roaming device MAC address, and internal IP address 10.50.22.3 allocated by the AP 14.

Referring again to Figure 11A, in this embodiment of the invention roaming device 16 is first allocated a Private IP address from an IP address range supplied to an AP 14 via the RADIUS server's ServiceID&IPAddress database 32. The AP14 has built in DHCP server functionality which allocates a device IP address from the allocated range. The IP SA allocated to the device 16 is then forwarded by the AP 14 to the DCHP server 38 along with the device MAC address. Both the Device MAC address and Private IP address are forwarded by the DHCP server 38 to MS 40 and stored with the MS DS 44. Not shown in great detail in Figure 11A is the equivalent system for location B where the IP address may be allocated using the same addressing scheme (such as is shown in Figure 6b) or a different addressing scheme, for example, on such as one shown in Figures 6a,6c.

Figure 11B shows similar elements to those shown in Figure 11A and retains the same numbering scheme. In Figure 11B, location services system 300 is configured to query the central monitoring system (CMS) 200 using interface 240. CMS 200 is configured to query a central monitoring system data store (CMSDS) 210. Local MS DSs 44a,b provide data which may be replicated in CMSDS 210, or may alternatively or in addition be configured to collectively provide data retrievable using an indexing scheme which propagates down from CMSDS 210, such as is described in more detail later herein below with reference to Figure 12.

The data in local MS DSs 44a, may be directly accessible to CMS 200 or indirectly retrievable via local MSs 40 a,b. Figure 11B also shows the private DSL domains and an additional level of NAT being required before the public address domain is reached (shown is NAT 27c in Figure 11B). The NAT node performing NAT here either pushes data indicating the IP address mappings performed (and any relevant port numbers assigned for data flows established between a device 16 and a remote server) through to the relevant local MS 40a,b or directly to the CMS 200. The web-servers which respond to location requests by devices 16 will generally provide addresses which are valid in the public address domain of the communications system 10 for WLAN location services are provided

Figure 12 shows schematically a way of providing a hierarchical database structure which facilitates a large-scale location service system according to the invention. In one embodiment of the invention, the processing complexity of any location service is made manageable by authenticating devices only when required. A distributed database structure such as is shown in Figure 12 enables a location to be resolved in response to a location query being received in real-time if required. In Figure 12, each local RAS monitoring database 44a,b,c,d effectively represents a physical region of the country since each RAS 24 is dimensioned to support typically between 50K to 100K customers associated with a number of connected DSLAMs.

A RAS 24 functions as a "macrocell" while a DSLAM functions as a smaller scale microcell. Each of these can be mapped to an area geographical coverage to provide a means of mapping movement both locally and nationally, by using a hierarchy of monitoring systems. Accordingly, in one embodiment an efficient database structure is provided by each monitoring system data base 44a,b,c,d associated with a RAS 24 being regarded as a macrocell element on a location database hierarchical structure where each DSLAM 22 represents a lower element. As each WLAN 14 has a relatively small range in the embodiments of the invention, incremental movement of a device will normally be localised and this approach to the database structure provides an efficient organisation as the associated movement data is local in its logical structure. This provides geographical scalability with queries directed to the CMS 200 by location server 300 propagating down to the local MS DS 44a,b as appropriate.

In Figure 12 the data storage architecture is structured for providing geographic coverage of the UK. The root DB (UK) data store 210 contains a list of all current MAC addresses and user ID, a marker to show if the device requires tracking with a vector point to the next DB 220a,b,c,d below. Here DB 220a represents broadly speaking "England", and a marker in DB 210 would indicate that this database is relevant by a suitable tag (e.g., "E" for England). For example, an enquiry at root CMSDS node 210 determines if a particular MAC is on line at that time. If it is then the entry against it will have E for England. In the national DS 220a there is a tag for the regional datastore, 230a, and in the regional data store a tag indicates a particular RAS level DB 44, for example, a tag for !P for Ipswich. Once an entry is determined down to the RAS level data store 44 the data record can be retrieved from which location information can be determined.

Returning now to Figures 11A,B the following method is used in one embodiment of the invention to retrieve stored location information for device 16a. Firstly, responsive to a location request from location services server 300 which includes an IP Address and/or a device ID monitoring system 40a queries either using the public IP address and/or the deviceID its monitoring database 44a. In this embodiment, the MS DS data records are populated with information which associates the public IP address with a private IP address. In alternative embodiments, MS 40 may query NAT store 27 responsive to receiving a location request for a public IP address to determine the private IP address.

The current Private IP address of the device is then used by MS 40 to query the range data store 36, which returns the APID if this information has not been previously captured and stored in its MS DS 44.

The monitoring system uses the APID returned to query the AP Information data store 34 to determine the current DSL IP address allocated to the AP 14, and then queries the data store 32 used by the RADIUS server 28 which enables the AP's ServiceID to be determined. Finally the monitoring system queries using the SID the subscriber record data store 30 which enables the location of the address for service associated with that ServicelD to be verified.

The monitoring service may track devices, particularly if the devices have registered for a tracking service. For example, in one embodiment, a monitoring record stored in monitoring data store 44 contains the device Mac address, a time stamp recording when traffic was intercepted from the device and/or alternative the time the IP address of the device was allocated by the AP, the AP's IP address and a reference number for the relevant DSLAM data base.

As the local data stores 44a,b provide local movement changes at a fine level of granularity, location data is retrievable at a fine-level of detail over the entire monitoring system data store hierarchy shown in Figure 12. The hierarchical structure organises local changes at the local level in its logical structure to provide a scalable and rapid search strategy. It provides a means to track identified devices over a large scale, despite the very small scale of each WLAN and in a way which minimises the amount of data to be stored. The processing is conserved to minimum and only used to track devices when required.

In some scenarios, all roaming WLANs are assigned a consistent SSID, which means a device which has successful attached whilst roaming to one network SSID may automatically generate signalling traffic when it roams in other WLANs sharing that SSID. This signalling can include IP address information which is generated without a user necessarily actively using the device to generate a request for service (such as, for example, generating a request for content which would require the device to connect to the internet) which would require the user to authenticate their use of the wireless access point roaming service.

### DEVICE LOCATION SERVICE

Figure 13 of the accompanying drawings shows an embodiment of a system arranged to provide device location services to a service requesting device or platform 302. The service requesting device 302 comprises any suitable web-server platform, which may itself be mobile although in practice any commercial scale web-server is more probably provided at a fixed location.

In Figure 13, a location services portal (LSP) 300 is shown which is addressable by a service requesting platform 302. The SRP 302 may comprise a web-server or the roaming device 16. LSP 300 is addressed by the SRP 302 using any suitable communications protocol query structure, for example, a suitable url type query interface may be provided. LSP 300 is hosted on a suitable platform which is arranged to enable interrogation by the LSP of CMS 200 through an appropriate application programming interface (API) 240.

As shown schematically in Figure 13, API 240 provides access to the central monitoring system 200. The query comprises at least a public IP address provided by the SRP 302 for which a location is requested. The query is processed by CMS 200 to extract the public IP address which is then used to query the CMSDS 210.

NAT may be performed at this point to determine a private IP address or the query may use the public IP address to propagate the query to the appropriate local RAS MS 40 and its local NAT datastore data held in its local MS DS 44.

Once a query to the NAT data store 27 has resolved the public IP address to a private IP address, the private IP address is record held in the local MS DS 44 may either be directly associated with an AoS held in that record, or used to perform a look-up to enables a AP ID to be determined using range data store 36.

The data records used at this point involve data which is related to the connection service used by the roaming device 16. Once the AP ID has been determined, however, this may resolve to a particular data-store subsystem 44 such as are shown in Figures 11a,b, and Figure 12. From the AP ID the DSL IP address used by the AP 14 can be determined by querying data store 34, which enables the ServiceID used by the AP 14 to be determined by querying data store 32, which in turn allows the Address for Service for that particular serviceID to be determined from AoS data store 30.

As mentioned herein above, the data held in the records for one or more or all these service and/or network management data stores may be extracted and held in a single data store 210 used by the monitoring system and/or may be directly stored in records associated with each roaming device's record. In practice, the scale of information held and the constraints which data protection can impose, means that querying several sources of information held in existing data bases may be more practical.

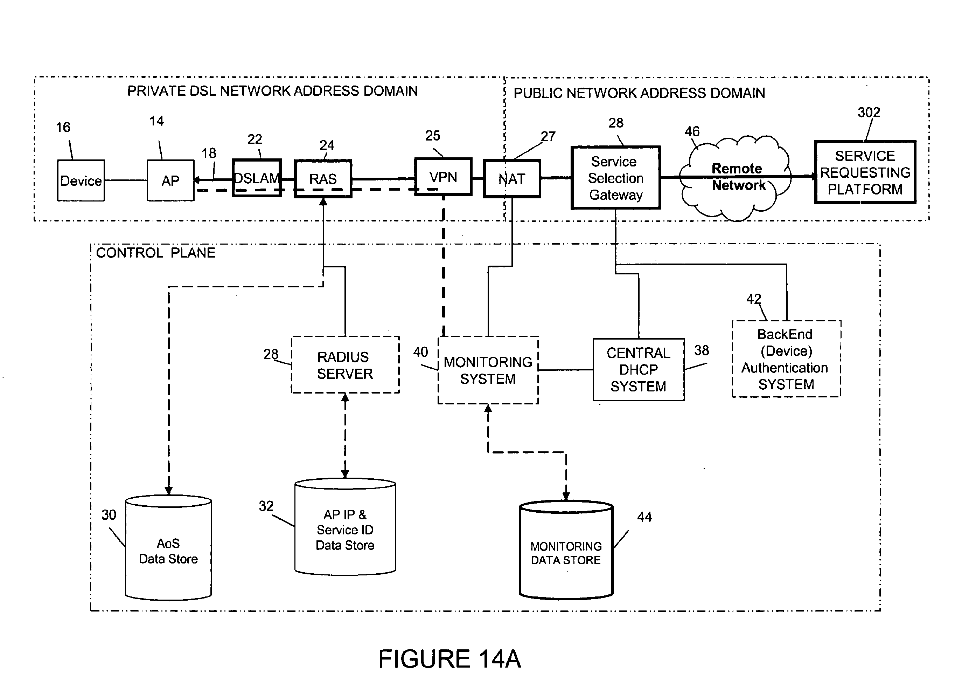

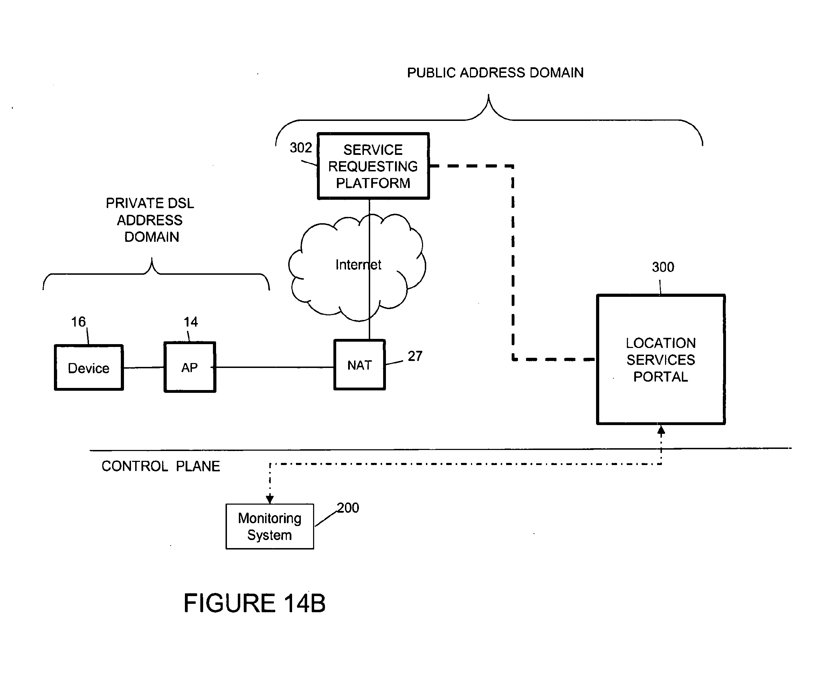

Figure 14A shows device 16 seeking to access a service provided by a remote web-server. The service requested is one which is dependent on or enhanced by location information for the requesting device. If PAT is used within the access network to enable reuse of the IPv4 address space the port number will be assigned to the client device (here roaming device 16) when it establishes a flow to the remote server. In this case, the IP address and port number allocated to the data flow between device 16 and webserver 302 will be used by the location services system 300 to locate the device 16 within the correct WLAN 12.
Accordingly, responsive to the access request, webserver uses the public IP address information and port number it extracts from the connection request to generate a location query which is sent to location server system 300. As shown in Figure 14A, the remote web-server is functioning as a location service requesting platform (SRP) 302. The other elements shown in Figures 14A,B retain the numbering scheme for elements shown in the earlier accompanying drawings.

Figure 14B shows how the request received by the web-server platform 302 uses a public IP address as its source address. When the service requesting platform 302 generates a location query message for an address associated with a connection request (or otherwise associated with a device 16), the address provided to location services portal 300 and used by the location services portal 300 to query monitoring system 200 comprises a public, NAT translated address.

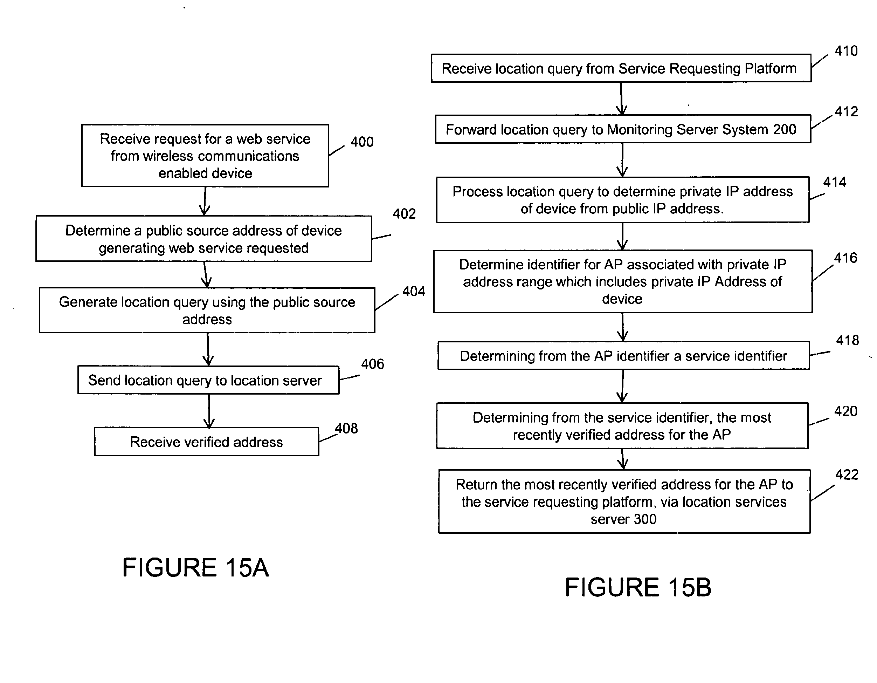

Figures 15A and 15B show how a method of providing a device location service to a web-server is implemented by the server and by the location services portal in one embodiment of the invention.

In Figure 15A, web-server 302 receives a request for a web-service from a device 16 (step 400), the public IP source address of the device is extracted from the request (step 402) and used to generate a location query (step 404). As shown in Figure 15A, the location query comprises the pubic !P address determined from the connection request, but in alternative embodiments of the invention, the location query includes additional information such as the MAC address of the device and/or the port used by the device. The MAC address may be encrypted suitably for added security.

The location query is sent to a location services portal 300 (step 406). Any suitable communications protocol capable of providing a suitable query format can be used, for example an XML message or message supporting a SQL query addressed using a suitable addressing scheme. In one embodiment, the service could be accessed via a url which provides an API for inputting a public IP address and returns the location service.

Assuming the query generated is successfully processed by the location services server 300, web-server 302 receives a response which includes the location address of the AP last verified when the AP established a connection (step 408) as determined from the address for service records for that connection, or a GPS co-ordinate reference as appropriate. Where a web-server 302 has queried the location services server 300, the response is associated with the connection request received (for example, by matching the IP address provided in the response with the IP address extracted from the connection-request received by the device 16). This accordingly enables web-server 302 to determine the location from which the connection request was received.

It is also possible for the roaming device 16 itself to comprise the location service requesting platform 302 and to generate a location request which is directly sent to the location services portal 300 in embodiments of the invention where device 16 is running an application which enables this.

Figure 15B shows steps performed by the location services server 300 and monitoring system 200 responsive to the receipt of a location services request being received by the location services server 300 (step 410). The query is processed to extract the public IP address and a query is then sent to monitoring system server 200 (step 412) which triggers a look-up operation being performed on NAT data store 27 to determine the private IP address (step 414). The private IP address range associated with the private IP address is used to determine the AP ID used by the device (step 416), and from this the service identifier for the connection the AP is currently using can be found (418), this enables the latest address for service associated with that service identifier to be retrieved (step 420), and this location, the address for service is then returned by the monitoring system 200, via the location server 300, to the location services requesting platform 302 (as shown in Figures 14A and B, this is a web-server 302, but as mentioned hereinabove, may comprise the roaming device 16 itself in other embodiments of the invention).

According, in one embodiment of the invention, a web services based location service is provided by a location server 300 which presents an internet API which allows third parties to make an enquiry of the location of device using the real time public IP address/ port number and device MAC address. In this embodiment, to maintain security of the location of users, the third parties must be subscribers to a third party location service and use https secured communications over the internet between the location service system 300 and their own service requesting platforms 302. Similarly, communications between the devices and the third party web-sites should also use a secure communications protocol such as https. This way communications from the user to the web site and from the web site to the location service portal 300 are relatively secure.

In one embodiment, a device MAC address is encrypted using a public key system and the device MAC address is decrypted by the location service system 300 using the private key. This allows a third party web site to know the public IP address/port number at a given time but not the actual device MAC address. The location server returns the device location, as its physical address only if there is a match between the real time Public IP address/port number and the Mac address of the device with the location records accessed via the monitoring system at a given time, in either encrypted or un-encrypted form.

The location services portal 300/monitoring system 200 may be combine in any of the embodiments of the invention. Real time location of a device is provided if the Public IP address is known in real-time with the device MAC address (or encrypted MAC address). In embodiments where the MSDS 44 records host both the MAC address, the public IP address and/or a public IP address and local DSLAM (to the AP 14) allocated port number for the traffic flow associated with the roaming device's use of the AP's connection over the access network, and make this information available to the database hierarchy shown in Figure 12 through a suitable mechanism, monitoring system 200 can quickly resolve a query which contains a public IP address to determine the location of a device in real time. Similarly, within the communications system 10 a network operator can track a device as it moves between APs 14a,b,c,d,e,f on the network in real time

In one embodiment of a location services system according to the invention, the system first translates the public IP address/ port number to the internal address to check that the device was associated at that given time. If the MAC address is encrypted using a service provider public key then the MAC address within the service provider domain is de-encrypted first. Once these match then the physical address is determined and returned via https to the third party.

In one embodiment, the web services application allows pre-registration of the user and device address such as MAC address, or SIM card or Transport Layer Security (TLS) certificate as found in 802.1x. In this embodiment, it is necessary to only know its real time public IP address/port number of a device and the association of the device ID, such as MAC address or 802.1x, to return the device location. A web services entity 302 presents the device ID and the real-time IP address/port number to the location services portal 300. Whilst in one embodiment there is no need for the location service server 300 to know a user's identify (for example, to know a user identifier or any associated user credentials) unless this was verified independently using its verification system for the device ID, such information may be requested and included in the location service request in some embodiments.

The application on the device which is part of the location service associated with the third party is a third party application (e.g. an IPhone or Android™ type of application) or may be implemented in web-browser software. Where a web-browser is used, additional functionality associated with the service can be carried out by the installation of browser plug-ins using software technologies such as Java.

For non-tracking applications where a third party requires knowing the fixed location of the user then no time stamp is required. Normally, providing location and any service associated with the location is carried out relatively quickly and it is expected that the user will not have moved during the location query processing time or if they did it would be over a very short distance, given the broadband connectivity speeds which the WLAN AP provides access to.

In one embodiment of the invention, to reduce the processing complexity of any location service the physical location associated with the authentication is only carried out when required such as a static service as used by the web services company where it is envisaged that the device would not move during the session. An example would be buying tickets at the nearest cinema. Alternatively, if these tickets were purchased from home then part of the transaction would be to verify the home address to that stored against the customers' records adding additional confidence to the financial transaction. The real time presentation of the Public IP address/port number and the MAC address map to an Address for Service location using the dynamically assigned IP addresses which means the distributed database structure needs to resolve the location information when requested on a suitably rapid time-scale.

When the web services company presents the Public IP address/port number and device ID such as MAC address it is the former information that is used to locate the device's physical location while the later is used as a security check so that knowing the MAC address alone could not be used to find the user. The public IP address/port number is known in real-time as this is dynamically assigned. Each time the AP negotiates a DSL session and each time NAT is carried out. In embodiments of the invention in which device movements are tracked centrally by the Monitoring System, this can be performed using just the MAC of the roaming device as a look-up. Accordingly, the monitoring databases 210, 44 etc. of the monitoring service are configured in such a way that IP address, IP address and port number (assigned by the DSLAM) and the MAC address of a roaming device can be used as a search index. In this way, three different types of WLAN location services can be provided to locate a roaming device. One mode of WLAN location service uses the public IP address alone, the other uses the Public IP address and uses a MAC address as an additional verification element, and finally, it is possible to use a device ID when known alone (e.g. the MAC address of the device) to locate a lost or missing device or in any situation where the location needs to be determined but the device has not yet been allocated an IP address or may not be using its IP address or the IP address is not known.

The above description of the embodiments of the invention indicate how traffic originating from a device roaming in an open-access wireless local area network can be monitored from within a core communications network system by collecting information forwarding at the termination point of the secure tunnel established for traffic from the open-access roaming/guest devices. The term core communication system as used herein refers to the communications network locate at or beyond the first line aggregation point or node.

One example of a line aggregation point or node is a kerb-side cabinet but more generally the monitoring system will be located on the far side of the nearest local exchange via which traffic from the roaming device 16 originates.

This information is used to populate a roaming device location record for the roaming device 16 in a suitable device location data store. A roaming device location record is generated for each device ID and contains a series of data fields which index against an IP address assigned to the roaming device, a time and/or date stamp and the current location of the device. The series of data fields may be configured so that they are separately searchable, so, for example, a specific IP address can be searched for which was used in a time-window in order to retrieve the device ID of the roaming device to which it was assigned.

An example of a record entry which the monitoring station can generate and maintain for a roaming device 16 comprises a plurality of data fields such as a plurality of the following a Device ID, a Device MAC address, a device public IP address, a device private IP address, an AP ID, an AP MAC address, an AP public IP address, an AP private IP address, the Date/Time the device associated with an AP (and optionally at what point the device first generated a request to a specific destination address), and the geographic location of the AP, which may be provided in mapping co-ordinates such as GPS or using a street address from a customer record. In some embodiments, records for each AP are provided which include the range of IP addresses which may be locally or centrally allocated to devices using a particular AP's WLAN.

As a specific example, a record may for a roaming device 16 comprises the following fields:

| Device ID | 00:16:cb:84:ab:e7 | | | |
|---|---|---|---|---|
| Device Public IP address | Device Private IP address | AP IP address | Date/Time AP associated with/used | Location of AP |
| 193.113.10.2 | 10.50.22.3 | 100.50.22.1 | 1-01-2010 12:00:01 | 37 23.516-122.02.625 |
| 193.113.10.6 | 10.90.25.3 | 10.90.25.1 | 01-01-201 12:05:01 | 37 23.516-122.03.1 |

The record shown above indicates that a device with the MAC address 00:16:cb:84:ab:e7 had a public device IP address 193.113.10.2, which corresponded to the private device IP address 10.50.22.3 and used an AP having IP address 10.50.22.1 at 12:00:01 at a location corresponding to the street address of the AP given in the customer record when the broadband service the AP uses was provisioned. The same device MAC address 00:16:cb:84:ab:e7 had a public device IP address 193.113.10.**6**, which corresponded to the private device IP address 10.90.25.3 when it later used an AP having IP address 10.90.25.1 at 12:05:01 at a different location corresponding to the street address of the AP given in the customer record when the broadband service the AP uses was provisioned

The location is stored in a suitable format, as shown above this is translated into in latitude and longitude coordinates but it may be alternatively provided as the street address data from the customer record from which it was imported.

In the above embodiment of a roaming device data record both the private IP address and the public IP address (or the NAT translated IP address) are associated in each roaming device record. The ability to associate a public IP address with a location enables the network operator controlling the network monitoring server to provide location services to third parties. Such third parties have access to a public IP address and/or an encrypted MAC address which serves to verify the correct location has been resolved in one embodiment of the invention, i.e., the MAC address enables the monitoring system to determine a verified location of a device which is using that public IP address and to confirm this is the correct address by determining if the decrypted MAC address matches the MAC address stored in its records. This enables security measures based on verifying if the location of the device is in accordance with a predetermined security criteria. By providing a mechanism which enables a public IP address to be associated with a device MAC address, third parties are provided with a greater degree of security.

Exemplary embodiments of the invention are described in detail herein above and pictorially in the accompanying drawings, however, the invention is not intended to be limited to such exemplary embodiments and includes various obvious modifications and equivalent arrangements which fall within the scope of the appended claims. Features referred to explicitly herein and in the claims may be replaced with alternative features providing functional equivalents where such functional equivalents would be known to those of ordinary skill in the art.

In the above description, references to "one embodiment," "an embodiment," "example embodiment," "various embodiments," etc., indicate that the embodiment(s) of the invention so described include a particular feature, structure, or characteristic. However, it is not necessary for every embodiment to comprise that particular feature, structure, or characteristic. Where the phrase "in one embodiment," or "in an exemplary embodiment," is referred to herein above it may or may not refer to the same embodiment as would be apparent to one of ordinary skill in the art.

Terms referring to features such as, for example, "processing," "computing," "calculating," "determining," or the like refer to an action and/or process(es) undertaken by a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

The term "computing platform" comprises one or more data processors, where a data "processor" refers to any device or portion of a device that processes electronic data from registers and/or memory to transform that electronic data into other electronic data that is capable of being stored in registers and/or memory.

One or more embodiments of the invention include apparatuses for performing the operations herein. An apparatus may be specially constructed for the desired purposes, or it may comprise a general purpose device selectively activated or reconfigured by a program stored in the device.

Where appropriate, a feature described herein in an embodiment of the invention may be implemented in one or a combination of hardware, firmware, and software. Where a feature is implemented as instructions stored on a machine-readable medium, such instructions may be read and executed by a computing platform to perform one or more or all of the operations and/or method steps described herein.

The term "machine-readable medium" comprises any mechanism for storing or transmitting information in a form readable by a machine (e.g., a computer). Examples of machine-readable mediums include, but are not limited to : read only memory (ROM), random access memory (RAM), magnetic disk storage media, optical storage media, flash memory devices, and propagated electrical, optical, acoustical or other suitable digital and/or analogue signals (for example, carrier waves, infrared signals, digital signals, etc).

Any references to the term "software", "application", "computer program" (which are used as equivalent terms herein) and/or "computer control logic" include as appropriate references to machine code and/or executable code and/or source code which when compiled results in execution on a computing platform of a set of instructions in accordance with the code.

A computer program may be provided in an electronically downloadable format or in a format which is stored in the main memory and/or secondary memory of a computing platform and/or data storage means capable of being attached and removed from a computing platform. Where a computer program is stored in one or more data storage means it comprises a computer program product. Such computer programs, when executed, are arranged to enable the computer platform or system to perform the features of the present invention as discussed herein. In particular, the computer programs, when executed, are arranged to enable a processor to implement one or more steps in a method according to an embodiment of the invention. Accordingly, such computer programs may represent data controllers of the computer system.

A computer program product comprising a computer readable medium having control logic (computer software) stored therein may be provided to distribute the invention or cause, when the product is loaded and running on one or more computer platforms, a method according to an embodiment of the invention to be performed. The control logic, when executed by one or more processors, causes the one or more processors to perform one or more of the functions of a method according to an embodiment of the invention as described herein. The computer program product software may be loaded into a computer system using any appropriate means, including appropriate data storage reading means and/or via a network communications interface card. Software implementing control logic executed by a data processor causes the processor to perform the functions of an embodiment of the invention as described herein. The computer program product software may run as a standalone software application program running in an operating system. Alternatively, it may be integrated into an operating system of the computing platform.

Features implemented primarily in hardware may comprise, but are not limited to, hardware components such as application specific integrated circuits (ASICs), field programmable gateways (FPGAs) or one or more state machines, etc. Any appropriate implementation of the hardware state machine so as to perform the functions described herein may be used as is apparent to a person or persons skilled in the relevant art(s).

The embodiments and examples discussed herein are non-limiting. The embodiments of the invention described in detail herein above form exemplary embodiments only and it will be apparent to those skilled in the art that changes and modifications may be made without departing from the spirit and scope of the invention, for example, in its broader aspects. The embodiments of the invention as defined in the claims are intended to cover all such changes and modifications as fall within the true spirit of the invention.

## Claims

1. A method of locating a wireless communications-enabled device roaming in a wireless local area network from which a request for connection to a data-service originates, the method comprising:
receiving the request at a data-server for the requested data-service;
processing the received request for connection to the data-service to determine a public source address of the connection request;
generating a location request query for the public source address;
sending the location request query to a location server;
processing the public source address for the connection request at the location server to determine a private source address; and
mapping the private source address to a physical location by associating the private source address with a range of source addresses allocated to a wireless local area network access point providing the wireless local area network via which the device sends the request for connection to the data-service to the data-server.

2. A method as claimed in claim 1, further comprising the step of:
reporting the physical location of the device to the data-server for the requested data-service.

3. A method as claimed in claim 1 or 2, wherein the physical location of the device is determined by:
determining the physical location of the wireless network access point providing said device with wireless internet connectivity.

4. A method as claimed in claim 3, wherein the physical location of the wireless network access point providing said device with wireless internet connectivity is determined by:
associating the IP address to an IP address range allocated to an identifier for the wireless network access point;
determining from the WLAN AP identifier a service ID for the connection over the access network which is used by the wireless network access point;
determining from the service ID a geographic address at which the network access point is located.

5. A method as claimed in any previous claim, wherein the service identifier for the connection over the access network comprises a calling line identifier for a broadband activated line over a public switched telephone network.

6. A method as claimed in any previous claim, wherein a data-service provides a world-wide-web application-based data service

7. A method as claimed in any previous claim, wherein the data-service requested by the device comprises a location service, and wherein said data-service service comprises said location server.

8. A method of locating a wireless communications-enabled device roaming in a wireless local area network from which a request for connection to a web-service originates, the method comprising:
receiving the request for the requested web-service;
processing the received request for connection to the web-service to determine a public source address of the connection request;
generating a location request query for the public source address;
processing the public source address for the connection request to determine a private source address; and
mapping the private source address to a physical location by associating the private source address with a range of source addresses allocated to a wireless local area network access point providing the wireless local area network via which the device sends the request for connection to the web-service.

9. A method as claimed in any claim 8, in which the physical location of the wireless access point providing the wireless network used by the device is verified each time the wireless access point establishes a connection over the local access network to an access server.

10. A method as claimed in any previous claim, in which the device is a device roaming in a WLAN configured to allow roaming device usage.

11. A method as claimed in any previous claim, in which the public IP address is paired with a port identifier.

12. A location server system arranged to provide a location-service to data-servers, the location server being arranged to locate wireless communications-enabled devices in a plurality of wireless local area network from which requests for connection to data-services originate, the server system comprising:
means to receive a location request from a data-server which has received a request for connection to a data-service from a wireless communications-enabled device, the requests including a public source address for the device;
means to associate said public source address with a private source address;
means to associate the private source address to a range of private source addresses which are allocated to a wireless local area network access point providing a wireless local area network via which the device sends the request for connection to the data-service to the data-server,
means to generate a response identifying the wireless network access point location to the requesting data-server; and
means to send said response to the requesting data-server.

13. A server system as claimed in claim 12, wherein the data-service requested by the device comprises a location service, and wherein said data- server comprises said location server.

14. A system for locating a wireless communications-enabled device roaming in a wireless local area network from which a request for connection to a data-service originates, the system comprising:
means for determining a public source address for said device;
means for generating a location request query for the public source address;
means for sending the location request query to a location server;
means for processing the public source address for the connection request at the location server to determine a private source address; and
means for mapping the private source address to a physical location by associating the private source address with a range of source addresses allocated to a wireless local area network access point providing the wireless local area network via which the device has sent said request for connection.

15. A method of providing location information to a data-server providing a service which uses location information, the method comprising:
storing device presence information indicating the presence of a device in a wireless local area network in a data record for said device;
storing in said data record for said device as a device location an address for service of an access network connection service used by an access point providing said wireless local area network;
using location query index information extracted from a service request generated by an authenticated device and sent to said data-server to retrieve from said data record for said authenticated device said device location; and
sending said device location information to said data server for use by said requested service,
wherein said device presence information is generated prior to said device being authenticated to use a communications link provided by said access network connection service, and wherein said location query index information used to search for said data record comprises one or more of the following: a public IP source address for said authenticated device included in said service request; and a device identifier for said authenticated device included in said service request.
